(19) Europäisches Patentamt
European Patent Office
Office européen des brevets

(11) Veröffentlichungsnummer: **0 237 792 B1**

(12) # EUROPÄISCHE PATENTSCHRIFT

(45) Veröffentlichungstag der Patentschrift: **10.04.91**

(51) Int. Cl.5: **C08F 4/00**, C08F 2/38

(21) Anmeldenummer: **87102006.1**

(22) Anmeldetag: **13.02.87**

(54) **Telechele Polymere.**

(30) Priorität: **14.03.86 DE 3608556**

(43) Veröffentlichungstag der Anmeldung:
**23.09.87 Patentblatt 87/39**

(45) Bekanntmachung des Hinweises auf die Patenterteilung:
**10.04.91 Patentblatt 91/15**

(84) Benannte Vertragsstaaten:
**AT BE CH DE ES FR GB IT LI NL SE**

(56) Entgegenhaltungen:
**EP-A- 0 205 846**
**US-A- 2 813 849**

(73) Patentinhaber: **AKZO N.V.**
**Velperweg 76**
**NL-6824 BM Arnhem(NL)**

(72) Erfinder: **Mezger, Thomas, Dr.**
**Am Mainbogen 15**
**W-8765 Erlenbach/Main(DE)**

(74) Vertreter: **Fett, Günter**
**Akzo Patente GmbH Kasinostrasse 19 - 23**
**W-5600 Wuppertal 1(DE)**

**EP 0 237 792 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft telechele Polymere auf Basis von mittels Dithiocarbamat-Verbindungen als Initiator radikalisch polymerisierten äthylenisch ungesättigten Monomeren, Verfahren zu deren Herstellung sowie deren Verwendung.

Telechele Polymere sind Polymere mit reaktiven funktionellen Gruppen an den Polymerkettenenden und mit im allgemeinen relativ kleinen Molekulargewichten ($\bar{M}_n$<5000) und zumeist engen Molekulargewichtsverteilungen; die Uneinheitlichkeit

$$\frac{\bar{M}_w}{\bar{M}_n} - 1$$

liegt im allgemeinen zwischen 0 und 3.

Telechele Polymere sind besonders interessant als niedrigviskose Ausgangsstoffe für hochmolekulare lineare oder vernetzte Polymer. Einer breiten Anwendung interessanter telecheler Polymerer, zum Beispiel solchen mit Amino-, Hydroxy- oder Carboxylgruppen an den Kettenenden, steht bisher jedoch oft mangelnde Wirtschaftlichkeit ihrer Herstellung entgegen.

Häufig werden die Endgruppen der telechelen Polymeren oder Ihre Vorstufen aus den Bestandteilen der eingesetzten Polymerisations-Initiatoren gebildet. - Die meisten bekannten Herstellungsverfahren erfordern entweder hochreine Reagenzien (anionische Polymerisation, Gruppen-Transfer-Polymerisation nach Du Pont) oder den Einsatz teurer Initiatoren, zum Beispiel funktionalisierter Azoverbindungen (vgl. BE 768 719).

Es sind auch Verfahren zur Herstellung von telechelen Polymeren mit einfachen Reagenzien bekannt, doch beschränken sich diese nur auf wenige zu polymerisierende Monomere. Beispielsweise beschränkt sich der Einsatz von Wasserstoffperoxid als Initiator zur Herstellung von Hydroxy-telechelen Polymeren lediglich auf die Polymerisation von Butadien (Makromolekulare Chemie 183 , 303 (1982)) und von Acrylaten (Makromolekulare Chemie, Rapid Commun. 3 , 765 (1982); J.P. 58 69 206, 25.4.1983). Dabei werden auch zumeist unübersichtliche Molekulargewichtsverteilungen oder verzweigte Produkte erhalten (Makromolekulare Chemie 183, 2685 (1982)).

Schließlich ist auch die Herstellung von telechelem Polymethylmethacrylat und Polystyrol mittels einfachen Dithiocarbamat-Verbindungen wie Tetramethylthiuramdisulfid oder Tetraäthylthiuramdisulfid als Initiator bekannt, die zu Polymeren mit der für eine breite Anwendung weniger interessanten Dithiocarbamat-Gruppe an den Polymerkettenenden führt (Polymer Bulletin 7 , 197 (1982); Makromolekulare Chemie 27 , 142 (1958).

Aufgabe der vorliegenden Erfindung ist es somit, telechele Polymere auf Basis möglichst zahlreicher äthylenisch ungesättigter Monomerer zur Verfügung zu stellen, die sich in einem wenig aufwendigen Verfahren bei gut kontrollierbarer Molekulargewichtsverteilung mittels einfach zugänglicher Polymerisationsinitiatoren herstellen lassen, und die für eine vielseitige Anwendung interessante reaktive Gruppen an den Polymerkettenenden aufweisen.

Diese Aufgabe wird gelöst durch telechele Polymere auf Basis von mittels Dithiocarbamat-Initiatoren radikalisch Polymerisierten athylenisch ungesättigten Monomeren der allgemeinen Formel

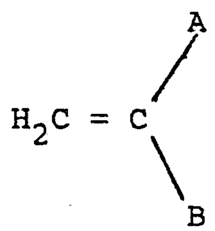 (IX)      A-CH=CH-B (X)

A = H, $CH_3$, Cl, CN, COOR, $CH_2$-COOR

B = COOR, CH=$CH_2$, Cl, CN, $C_6H_5$, $C_6H_4Cl$, para-Toluyl, Chlor-Toluyl, pyridyl,

R = Alkylrest mit 1 - 12 C-Atomen

die durch Polymerisation mittels Thiuramdisulfiden und/oder Estern der Dithiocarbamidsäure erhalten werden, welche neben der Carbamat-Gruppierung eine oder mehrere weitere funktionelle reaktive Gruppe(n) aufweisen, dadurch gekennzeichnet, daß sie durch Polymerisation mit solchen Thiuramdisulfiden und/oder Dithiocarbamaten erhalten werden, die als weitere funktionelle, chemisch reaktive Gruppe(n) Amino-,

Hydroxy-, Carboxyl- und/oder Carbonylgruppen aufweisen, jedoch nicht mit Bis-(N-methyl-N-hydroxyethyl)-thiuramdisulfid, wenn Wasserstoffperoxid als zusätzlicher Initiator verwendet wird.

Eine erst nach dem Prioritätstag der vorliegenden Erfindung veröffentlichte ältere Anmeldung, EP 0 205 846, beschreibt die Herstellung von Hydroxy-telechelen Polymeren auf Basis von Acrylaten durch Polymerisation "in Gegenwart eines zur Übertragung von Hydroxylgruppen auf das Polymer befähigten Initiators aus der Gruppe der Peroxide, Hydroperoxide oder Azoverbindungen oder unter Einwirkung von UV-Strahlen", (vorzugsweise und konkret in den Beispielen genannt wird wasserstoffperoxid) und gleichzeitig "in Gegenwart von Hydroxylgruppen enthaltenden Reglern der allgemeinen Formel $HO\text{-}A\text{-}S_x\text{-}B\text{-}OH$", worunter auch ein mit Hydroxylgruppen substituiertes Thiuramdisulfid (Bis-(N-methyl-N-hydroxyethyl)-thiuramdisulfid = Bis-(N-methyl-N-hydroxyethylthiocarbamoyl)-disulfid) infrage kommt (konkret in den Beispielen genannt wird nur Bis-(hydroxyethyl)-disulfid). Es wird nichts darüber ausgesagt, ob hierbei auch telechele Polymere mit Carbamat-Endgruppen gebildet werden; doch ist letzteres nicht auszuschließen.

Bevorzugt werden erfindungsgemäß solche telechelen Polymeren , die durch Polymerisation mit Dithiocarbamaten und Thiuramdisulfiden der allgemeinen Formeln

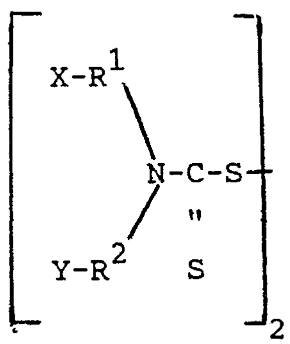

und

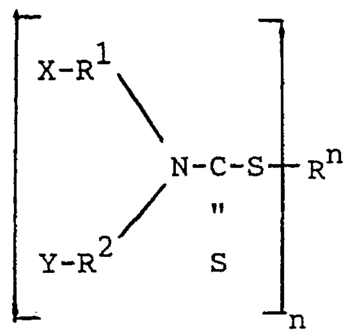

(I) (II)

erhalten werden, worin

X, Y = H, COOH, $NR^3R^4$, $\overset{\oplus}{N}R^3R^4R^5$, OH, 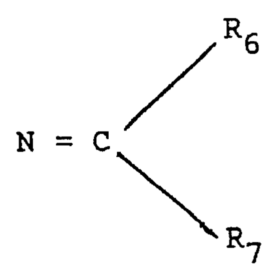

X ≠ H, wenn Y = H
Y ≠ H, wenn X = H

$R^1$, $R^2$ = Alkylen mit 1 bis 10 Kohlenstoffatomen, Cycloalkylen mit 5 bis 10 Kohlenstoffatomen
$R^3$, $R^4$, $R^5$ = H, Alkylrest mit 1 bis 18 Kohlenstoffatomen,
$R^6$, $R^7$ = H, aromatischer Rest mit 6 bis 10 Kohlenstoffatomen, cycloaliphatischer Rest mit 5 bis 10 Kohlenstoffatomen, aliphatischer Rest mit 1 bis 6 Kohlenstoffatomen

$R^6$ ≠ H, wenn $R^7$ = H
$R^7$ ≠ H, wenn $R^6$ = H

$R^n$ = n-wertiger organischer Rest mit einer bis n Methylengruppe(n), welche in α-Stellung zu einer Carbonylgruppe oder zu einem Kohlenstoffatom eines aromatischen Ringsystems stehen, wobei der organische Rest $R^n$ über eine solche Methylengruppe mit dem Dithiocarbamat-Schwefelatom gemäß Formel (II) verbunden ist,

n = ganze Zahlen von 1 bis 4 bedeuten, oder in welchen die Gruppierung

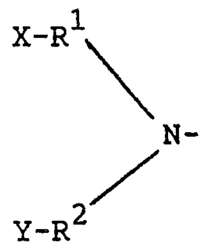

einen heterocyclischen Ring (III) bildet

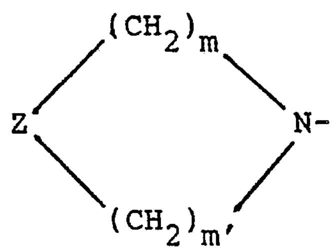
(III)

mit Z = NH, $NR^1$-X, C=O, CH-W W = COOH, COOR, OH, $R^1$OH
und m = ganze Zahlen von 1 bis 3
sowie m' = Null und ganze Zahlen von 1 bis 3.

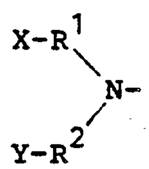

kann auch einen heterocyclischen Ring (III) bilden

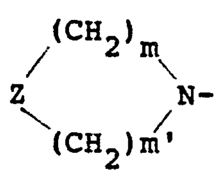
(III)

mit Z = NH, $NR^1$-X, C=0, CH-WW = COOH, COOR, OH, $R^1$OH
und m = ganze Zahlen von 1 bis 3
sowie m' = Null und ganze Zahlen von 1 bis 3.

Zur Herstellung der erfindungsgemäßen telechelen Polymeren werden mit geeigneten funktionellen Gruppen substituierte Dithiocarbamate und Thiuramdisulfide als Radikalbildner eingesetzt. Sie haben den Vorteil, daß sie geruchfrei, nicht toxisch und insbesondere aus billigen Rohstoffen in einfachen Verfahren zugänglich sind.

Die Thiuramdisulfide können zum Beispiel aus einem entsprechend substituierten sekundären Amin und Schwefelkohlenstoff durch oxidative Umsetzung erhalten werden (vgl. z.B. DE-OS 29 44 225), beispielsweise nach der Gleichung

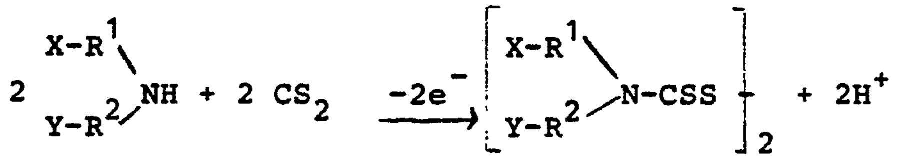 (1)

(VI) (I)

Für die Herstellung der Dithiocarbamate kann zunächst aus dem entsprechenden sekundären Amin und Schwefelkohlenstoff das auch gemäß Reaktion (1) intermediär gebildete Dithiocarbamat (VII) hergestellt und dann nach üblichen Verfahren mit einer entsprechenden organischen Verbindung mit aktivierten Chlorsubstituenten zum Beispiel nach der Gleichung

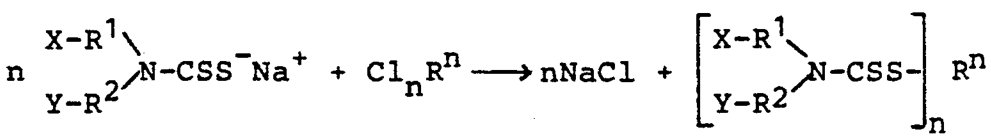 (2)

(VII) (VIII) (II)

n = ganze Zahlen von 1 bis 4
zum Dithiocarbamat umgesetzt werden.

Als mit dem Dithiocarbamat-Salz (VII) umzusetzende organische Verbindungen (VIII) mit einem aktivierten Chlorsubstituenten kommen bevorzugt solche Verbindungen in Frage, in denen sich das Chloratom an einer Methylengruppe befindet, die in $\alpha$ -Stellung eine Carbonylgruppe oder ein Kohlenstoffatom eines aromatischen Ringsystems aufweist. Von diesen werden für die erfindungsgemäß einzusetzenden Initiatoren solche organischen Chlorverbindungen bevorzugt, deren Chloratom sich an der Methylengruppe von Chloressigsäureestern oder an der Methylengruppe von Benzylverbindungen befindet. In diesem Fall werden dann als erfindungsgemäß einzusetzende Dithiocarbamate die Verbindungen (IV) und (V) gebildet.

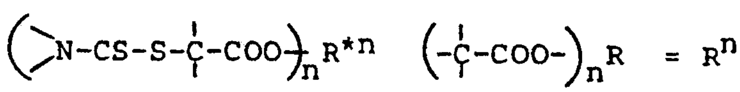 (IV)

n = ganze Zahlen von 1 bis 4

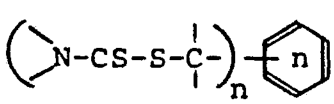 (V)

n = ganze Zahlen von 1 bis 3

Für den Einsatz dieser Dithiocarbamate als Polymerisations-Initiatoren ist es wichtig, daß sie unter den Bedingungen der Polymerisation im Hinblick auf wiederholte Aktivierbarkeit die Radikale

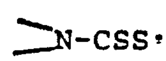

abspalten. Hierfür ist eine entsprechende Aktivierung des mit dem einen Schwefelatom verbundenen Methylen-Kohlenstoffs erforderlich, wie sie bei den erfindungsgemäß eingesetzten Initiatoren vorzugsweise durch die benachbarte Carbonyl- bzw. aromatische Kohlenstoffatome gegeben ist. Ist dies nicht der Fall, so

erfolgt bei der Polymerisation Spaltung der CS-S-Bindung unter Bildung eines Thiocarbamoyl-Radikals

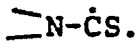

Wenn ein solches Thiocarbamoyl-Radikal durch Rekombination die Polymerendgruppe bildet, ist es im Gegensatz zum Radikal

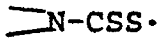

nicht mehr aktivierbar, so daß Kettenabbruch eintritt.

Beispiele für sekundäre Amine (VI) als Ausgangsverbindung für erfindungsgemäß bevorzugt einsetzbare Dithiocarbamate (II) sind insbesondere solche, in denen $R^1$ und $R^2$ einen Alkylenrest mit 1 bis 3 Kohlenstoffatomen bilden, ferner solche, in denen X oder Y ein Wasserstoffrest und/oder die funktionellen Gruppen OH, $NR^3R^4$ oder

$$\overset{\oplus}{N}R^3R^4R^5$$

sind mit $R^3$, $R^4$ und $R^5$ = H und Alkyl mit 1 bis 4 C-Atomen, bilden zum Beispiel

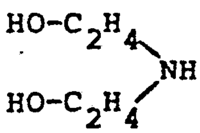 oder 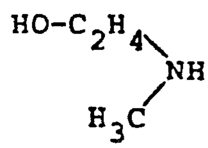

Andere Beispiele für Amine als Bestandteil von erfindungsgemäß bevorzugt einzusetzenden Thiuramdisulfiden und Dithiocarbamaten sind solche, in denen das Amin den heterocyclischen Ring (III)

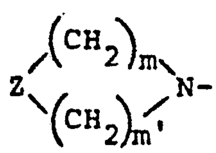

bildet mit m, m' = 1 bis 3, bevorzugt 2, und Z = NH, $N\text{-}R^1OH$, $N\text{-}R^1\text{-}NH_2$, $N\text{-}R^1\text{-}N{=}CH\text{-}Ar$ mit $R^1$ als Alkylenrest mit 1 bis 3 Kohlenstoffatomen, CH-COOH und C=O, wie zum Beispiel

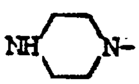 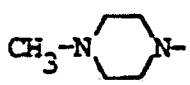 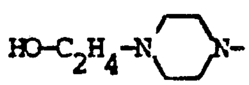 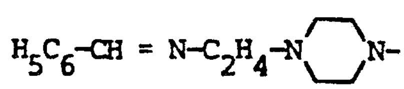

Die erfindungsgemäßen telechelen Polymeren können Homo-, Co-oder Blockcopolymerisate sein, die durch entsprechende Polymerisation radikalisch polymerisierbarer äthylenisch ungesättigter Monomerer erhalten werden. Bevorzugte erfindungsgemäße telechele Polymere sind solche auf Basis von vinylaromatischen Verbindungen, Acrylsäureestern und/oder Methacrylsäureestern. Als vinylaromatische Verbindungen werden bevorzugt Styrol, p-Methylstyrol, p-Chlorstyrol, Chlormethylstyrol und/oder 2-Vinylpyridin eingesetzt.

Monomere der allgemeinen Formel (X), wie zum Beispiel Fumarsäure-und Maleinsäureester, Maleinsäureanhydrid und Zimtsäureester, werden insbesondere für Copolymerisate eingesetzt.

Bevorzugte Copolymere sind solche auf Basis von Styrol bzw. Acrylat (Acrylsäure- und Methacrylsäureester), wobei als Comonomere alle der oben genannten Monomeren in Frage kommen, die eine geeignete Copolymerisierbarkeit mit Styrol bzw. Acrylat aufweisen. Die Copolymerisierbarkeit kann leicht beurteilt werden durch Gegenüberstellung der Copolymerisations-Parameter R bzw. der e- und Q-Werte gemäß e-Q-Schema nach Alfrey und Price (s. z.B. "Dispersionen synthetischer Hochpolymerer", Teil I, von F. Hölscher, Springer Verlag Berlin, Heidelberg, New York 1969, Seiten 102/103). Beispielsweise lassen sich bei der photoinitiierten Copolymerisation Styrol bzw. Acrylat geeignet mit solchen Monomeren polymerisieren, deren Q-Wert oberhalb 0,1,bevorzugt oberhalb 0,2 und insbesondere oberhalb 0,4 liegt.

Besonders bevorzugte telechele Copolymere sind solche aus radikalisch polymerisiertem Styrol und konjugierten Dienen.

Gegenstand der vorliegenden Erfindung ist auch ein Verfahren zur Herstellung von telechelen Polymeren durch radikalische Polymerisation der entsprechenden äthylenisch ungesättigten Monomeren in Gegenwart von Thiuramdisulfiden und Dithiocarbamaten, welche neben der Carbamatgruppierung eine oder mehrere weitere funktionelle reaktive Gruppe(n) aufweisen, bei Temperaturen im Bereich zwischen -50 und 200 ° C. Bevorzugt wird bei Temperaturen zwischen 70 und 150 ° C gearbeitet, wenn die Polymerisation thermisch ausgelöst wird und zwischen -10 und 150 ° C, wenn die Polymerisation photolytisch ausgelöst wird. Thiuramdisulfide sind bekanntlich sowohl thermische wie auch photolytische Reaktionsstarter, während die Dithiocarbamate überwiegend photolytische Reaktionsstarter sind. Thiuramdisulfide haben eine hohe Übertragungskonstante für zahlreiche Monomere, was sich vorteilhaft auf die Regulierung des Molekulargewichts im Sinne relativ niedriger Uneinheitlichkeiten der Polymerketten auch bei hohen Umsätzen auswirkt.

Thiuramdisulfide wirken bei der Polymerisation nicht nur als Initiator, sondern auch als retardierender Kettenüberträger, das heißt das Thiuramdisulfid kann auch mit dem radikalischen Ende einer wachsenden Polymerkette reagieren, wobei Kettenabbruch eintritt und ein neues Initiator-Radikal gebildet wird, welches ein neues Monomer jedoch langsamer anlagert als die wachsende Polymerkette, womit also eine Verzögerung der Polymerisation eintritt. Hierdurch weicht die Polymerisationskinetik vom einfachen Schema ab. Die Initiatorfragmente werden als Endgruppen in das Polymere eingebaut und sind photolytisch in Gegenwart von Monomeren wieder abspaltbar. Der Retardierungseffekt ist bei den einzelnen Monomeren unterschiedlich ausgeprägt und kann bei Copolymerisationen durch geeignete Wahl der Comonomeren eingestellt werden. - Bei mit Dithiocarbamaten initiierten Polymerisationen sind Übertragungsreaktionen weniger wahrscheinlich.

Da die Dithiocarbamat-Endgruppen der Polymeren photolytisch erneut in Radikale spaltbar sind, ist in einer zweiten Polymerisationsstufe Blockcopolymerisation mit weiteren zugegebenen Monomeren möglich.

Die telechelen Polymeren können erfindungsgemäß durch Polymerisation sowohl in Gegenwart als auch in Abwesenheit eines inerten Lösungsmittels hergestellt werden. Im allgemeinen wird in Anwesenheit von Lösungsmitteln die Umsatzgeschwindigkeit erniedrigt. Der Anteil der zu polymerisierenden Monomeren sollte daher 20 Gew.-%, bezogen auf das Reaktionsgemisch, nicht unterschreiten.

Im Interesse guter Raum/Zeit-Ausbeuten wird bevorzugt in Abwesenheit eines Lösungsmittels gearbeitet. - Bei geringer Löslichkeit der Thiuramdisulfide und Dithiocarbamate in dem oder den zu polymerisierenden Monomer(en) verläuft die Polymerisation zunächst heterogen, mit steigendem Umsatz dann aber homogen.

In den Fällen, in denen die Monomeren nicht vollständig umsetzbar sind, wird bevorzugt in Anwesenheit von größeren Anteilen der zu polymerisierenden äthylenisch ungesättigten Monomeren polymerisiert als zur Bildung des telechelen Polymeren erforderlich sind; das heißt man polymerisiert bis zu einem Zeitpunkt, an dem 30 bis 90 % der äthylenisch ungesättigten Monomeren umgesetzt sind, und trennt die nicht umgesetzten Monomeren vom Polymerisat durch Extraktion mittels eines geeigneten Lösungsmittels oder durch Destillation, gegebenenfalls unter vermindertem Druck, ab. Der Monomer-Überschuß, also der Anteil bei der Polymerisation nicht umgesetzter Monomerer, fungiert dabei gleichzeitig als Lösungsmittel des gebildeten telechelen Polymeren. Bei einer derartigen Polymerisationsweise ist es günstig, die Polymerisation zu einem Zeitpunkt abzubrechen, an dem sich der Monomerumsatz verlangsamt hat bzw. wenn kein freier Initiator mehr im Reaktionsgemisch nachweisbar ist. - Diese Polymerisationsweise mit nicht vollständiger Umsetzung der Monomeren ist bekannt (s. z.B. Journal of American Chemical Society 80 (1958), Seite 5927 und 82 (1960), Seite 1277).

Auf die Verwendung von Lösungsmitteln kann vor allem dann nicht verzichtet werden, wenn durch Rückflußsieden die Polymerisationstemperatur vorgegeben bzw. die Polymerisationswärme abgeführt werden soll oder wenn der Initiator (Thiuramdisulfid bzw. Dithiocarbamat) gelöst werden muß. Im allgemeinen genügt es schon, wenn der Initiator teilweise gelöst ist. Um die an das Lösungsmittel gestellten Anforderungen zu erfüllen, können auch Mischungen von zwei oder mehreren Lösungsmitteln verwendet werden, beispielsweise Mischungen eines Lösungsmittels zum Lösen des Initiators und eines anderen zum Einstellen der Polymerisationstemperatur.

Für die basischen Thiuramdisulfide und Dithiocarbamate eignen sich besonders chlorierte Kohlenwasserstoffe.

Im Falle der Photopolymerisation sollte das Lösungsmittel vorteilhaft so gewählt werden, daß Edukt und

Endprodukt sich ständig in homogener Phase befinden. Ferner darf das Lösungsmittel nicht selbst nennenswert oberhalb 270 nm UV-Licht absorbieren. Einkernige Aromaten können verwendet werden.

Die telechelen Polymeren können erfindungsgemäß vorteilhaft auch in Gegenwart von Wasser als Reaktions-Medium hergestellt werden, wobei sämtliche Komponenten des Reaktionsgemisches oder nur Teile davon im Wasser gelöst, aber auch sämtliche Komponenten ungelöst vorliegen können. Ist das Reaktionsgemisch oder Teile davon in Wasser unlöslich, ist auf intensives Rühren zu achten,und/oder man kann geeignete Emulgatoren oder Dispergierhilfsmittel zusetzen. Geeignete Emulgatoren können beispielsweise anionenaktive Emulgatoren sein, wie die Salze von höheren Fettsäuren, von Schwefelsäureestern der Fettalkohole oder Alkylphenole oder von Sulfonaten, oder kationische Emulgatoren, wie Fettamine oder quartäre Fettammonium-Verbindungen, oder nonionische Emulgatoren, wie partielle Fettsäureester von Polyalkoholen oder Äthylen- bzw. Propylenoxid-Addukte mit Fettsäuren, Fettalkoholen oder Fettaminen. Geeignete Dispergierhilfsmittel können beispielsweise wasserlösliche Cellulose-Derivate, wie Carboxymethylcellulosen, oder wasserlösliche Polyvinylverbindungen, wie Polyvinylalkohol, Polyvinylpyrrolidon oder Poly(meth)acrylsäure bzw. ihre Salze sein.

Erfindungsgemäß wird vorteilhaft in Gegenwart von 2 bis 30 Gew.-% Initiator, bezogen auf das Gewicht der äthylenisch ungesättigten Monomeren, polymerisiert.

Zur Herstellung erfindungsgemäßer telecheler Polymerer können neben Thiuramdisulfiden weitere, zum Beispiel Peroxidoder Azoinitiatoren eingesetzt werden. Auch in diesem Falle wird die Dithiocarbamat-Gruppe endständig in die Polymeren eingebaut, wobei Polymere mit im statistischen Mittel weniger als zwei Kettenenden mit Dithiocarbamat-Endgruppe zugänglich sind.

Erfindungsgemäße telechele Polymere haben zahlenmittlere Molekulargewichte zwischen 500 und 20 000. Bevorzugte telechele Polymere sind solche mit zahlenmittleren Molekulargewichten zwischen 900 und 5000. Die Molekulargewichte lassen sich leicht einstellen durch die Wahl der Initiatorkonzentration und der Polymerisationstemperatur. Generell werden mit niedrigeren Initiatorkonzentrationen und mit niedrigeren Temperaturen höhere Molekulargewichte beobachtet.

Die erfindungsgemäßen telechelen Polymeren können Endgruppen besitzen, die neben der Dithiocarbamat-Gruppierung mehr als eine weitere funktionelle Gruppe aufweisen, die gleich oder verschieden sind.

Diese weiteren funktionellen Gruppen erhöhen die Löslichkeit in polaren Lösungsmitteln und vermitteln zugleich eine weitere chemische Umsetzbarkeit der telechelen Polymeren am Kettenende.

Durch die Möglichkeit, an das Polymerkettenende mehr als eine weitere, aber verschiedene funktionelle Gruppen einzuführen, ist es möglich, dem betreffenden Polymeren gezielt mehrere gewünschte Eigenschaften zu vermitteln. Beispielsweise zeichnet sich ein telecheles Polymer mit einem Kettenende

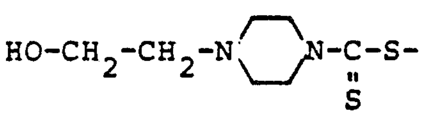

(IX)

dadurch aus, daß es die Fähigkeit der Kettenverlängerung durch chemische Reaktion, zum Beispiel mit entsprechenden Isocyanaten (gegebenenfalls in Gegenwart weiterer Verbindungen mit mehreren aktiven Wasserstoffatomen), und Löslichkeit in wäßrigen Medien besitzt. Eine erhöhte Löslichkeit kann im Falle obigen Beispiels mittels Quarternisierung des nicht zur Carbamatgruppe gehörenden Stickstoffatoms durch Protonierung oder Umsetzung mit Alkylierungsmitteln erreicht werden. So löst sich ein telecheles Polymeres mit solchen Endgruppen, zum Beispiel ein solches auf Basis Styrol/Butadien als Ammoniumsalz in verdünnten Säuren.

Die erfindungsgemäßen telechelen Polymeren sind im allgemeinen linear und weisen entsprechend zwei funktionelle Kettenenden auf. Es können erfindungsgemäß aber auch telechele Polymere mit mehreren Ketten, das heißt Stern-förmige Polymere, gebildet werden. Dies ist der Fall, wenn zur Herstellung der telechelen Polymeren von Dithiocarbamaten mit mehr als zwei Dithiocarbamat-Gruppen ausgegangen wird.

Aufgrund der genannten Eigenschaften sind die erfindungsgemäßen telechelen Polymeren hervorragend geeignete Ausgangssubstanzen für die Herstellung verschiedenartigster Polymerer. Dabei können unterschiedliche telechele Polymere miteinander oder mit anderen Produkten mit entsprechenden reaktiven Gruppen reagieren, gegebenenfalls unter Mitverwendung von Kettenverlängerern. Insbesondere eignen sich so die telechelen Polymeren als niedrigviskose Ausgangsstoffe für hochmolekulare lineare oder vernetzte Polymere. Es sei hier auch auf die Möglichkeit zur Herstellung von Blockcopolymeren aus mittels Thiuramdisulfiden gebildeten telechelen Polymeren hingewiesen, wobei letztere photolytisch in Gegenwart

von weiteren entsprechenden äthylenisch ungesättigten Monomeren umgesetzt werden. Solche Blockcopolymere können als (stein)-schlagbeständige Beschichtungen oder zähelastische Formmassen zum Einsatz gelangen.

Erfindungsgemäße telechele Polymere mit die Hydrophilie erhöhenden funktionellen Gruppen an den Kettenenden können in wäßrigen Systemen wie Lösungen, Emulsionen, Dispersionen und Suspensionen Anwendung finden. In diesen können sie sowohl als unverändertes telecheles Polymer (zum Beispiel als ionische - auch zwitterionische - Tenside oder Chelatbildner sowie als reaktives Vorprodukt) als auch als höherpolymeres lineares oder vernetztes Folgeprodukt vorliegen.

Bei der Verarbeitung der erfindungsgemäßen niedermolekularen telechelen Polymeren in Lösungen zu höhermolekularen Polymeren z.B. in Beschichtungs- und Anstrichstoffen, bietet sich der wesentliche Vorteil, daß Lösungen von relativ hohem Festkörpergehalt bei brauchbaren Verarbeitungsviskositäten zum Einsatz kommen können.

Einsatzgebiete können ferner die Herstellung von Überzügen, von Elastomeren und von härtbaren Gieß- und Preßmassen sein.

Besonders interessant sind die erfindungsgemäßen telechelen Polymeren als Bestandteil von Dichtungsmassen, Spachtelmassen, Vergußmassen und Klebstoffen. Butadienhaltige telechele Polymere sind als Bestandteil von Raketentreibstoffen interessant.

Interessant ist vor allem auch die Möglichkeit, erfindungsgemäße telechele Polymere als Ausgangsprodukte für höherpolymere lineare oder vernetzte Bindemittel auf dem Anstrichmittelbzw. Beschichtungs-Sektor einzusetzen; dies gilt insbesondere für wäßrige Systeme. - Vorteilhaft werden hierbei die telechelen Polymeren beispielsweise durch elektrophoretische Abscheidung appliziert.

Die erfindungsgemäßen telechelen Polymeren können nach elektrophoretischer Abscheidung in wäßrigen Systemen als reaktive Vorstufe von höherpolymeren einearen oder vernetzten Beschichtungen verwendet werden.

Sehr vorteilhaft eignen sich auch die telechelen Polymeren zur Herstellung von Elastomeren. Zum Beispiel lassen sich erfindungsgemäße telechele Polymere auf Basis von StyrolButadien-Copolymeren mit Hydroxylendgruppen mit Triisocyanaten oder Diisocyanaten mit Kettenverlängerern zu dauerelastischen Formkörpern umsetzen.

Ebenso sind die erfindungsgemäßen telechelen Polymeren ausgezeichnet geeignet zur Modifizierung von Oberflächen, z.B. zwecks besserer Benetzung durch andere Materialien, zwecks Haftverbesserung von Überzügen oder zwecks verbesserten Korrosionsschutzes.

Die vorliegende Erfindung wird durch die nachfolgenden Versuchsbeispiele näher erläutert.

Unter den in den Versuchsbeispielen verwendeten Mengenangaben "Teile" sind Gewichtsteile zu verstehen.

Beispiel 1 Darstellung von Bis(4-(2-hydroxyäthyl)-piperazin-l-thiocarbonyl)-disulfan

Zu einer Mischung von 32 Teilen Natriumhydroxid und 104 Teilen N-Hydroxyäthyl-piperazin in 1000 Teilen Wasser tropft man unter Eiskühlung 64 Teile Schwefelkohlenstoff so zu, daß die Temperatur nicht über 5 °C steigt. Sodann rührt man noch 90 min., mindestens jedoch so lange, bis sich der Schwefelkohlenstoff homogen gelöst hat. Anschließend gibt man über einen Zeitraum von 3 Stunden eine Lösung von 262 Teilen Kaliumhexacyanoferrat-(III) in 650 Teilen Wasser zu. Der entstehende Niederschlag wird filtriert, gründlich mit Wasser und zuletzt mit wenig Alkohol gewaschen und im Luftstrom bei Raumtemperatur getrocknet.

Man erhält 142,5 Teile einer gelben, pulverigen Substanz, welche sich nach Elementaranalyse aus 40,5 % C, 6,5 % H, 13,4 % N und 30,9 % S zusammensetzt (berechnet: 40,9 % C, 6,4 % H, 13,6 % N, 31,2 % S), und welche nach IR, $^1$H-NMR und Massenspektrometrie der Titelverbindung entspricht.

Die Beispiele 2 bis 12 beschreiben die Herstellung von telechelen Polymeren durch Polymerisationen unter Anwendung des gemäß Beispiel 1 hergestellten Thiuramdisulfids.

Beispiel 2

20,5 Teile des Thiuramdisulfids aus Beispiel 1 werden mit 104 Teilen frisch destillierten Styrols unter Rühren im schwachen Stickstoffstrom 11 Stunden auf 90 °C gehalten. nach dem Abkühlen gießt man das Reaktionsgemisch in 1 l stark gerührtes Methanol, filtriert, und erhält nach Filtration 72 Teile eines gelblichen Pulvers, welches nach gelpermeationschromatografischer Trennung ein Styrol-Oligomeres mit im

wesentlichen unimodaler Molekulargewichtsverteilung und einem Polydispersitätskoeffizienten $M_w/M_n$ von 2,8 ist. Titration einer Lösung des Produktes mit Perchlorsäure ergibt einen Amingehalt von 1 Mol/kg entsprechend einem Zahlenmittel des Molekulargewichts von 2000 g/Mol.

Beispiel 3

198 Teile des Thiuramdisulfids aus Beispiel 1 werden mit 505 Teilen Styrol und 622 Teilen Butylacrylat (beide frisch destilliert) unter Stickstoff gerührt und 20 Stunden bei 90 °C und noch 6 1/2 Stunden bei 100 °C polymerisiert.

Die nicht umgesetzten Monomeranteile werden im Vakuum (2,66 m bar (2 mm Hg), 80 °C) abdestilliert. Man erhält 880 Teile eines in der Wärme zähflüssigen, bernsteingelben Harzes, welches nach Gelpermeationschromatographie eine unimodäle Molekulargewichtsverteilung besitzt. Der Schwefelgehalt wird zu 6,8 % bestimmt, die Titration ergibt 1,6 % basischen Stickstoff. Die enthaltenen Hydroxyläquivalente werden zu 1,1 Äq/kg berechnet.

Beispiel 4

41 Teile des Thiuramdisulfids aus Beispiel 1 werden mit 379 Teilen Butadien und 104 Teilen Styrol in einem Druckrührkessel gemischt und bei 93 °C 40 Stunden lang polymerisiert. Nach Filtration und Abdestillieren der nicht umgesetzten Monomeranteile erhält man 328 Teile eines bei Raumtemperatur zähflüssigen, bernsteingelben, leicht trüben Harzes mit einer Viskosität von 91 Pa.s, einem Gehalt an basischem Sitckstoff von 0,5 Äq/kg und einem Schwefelanteil von 3,3 %. Die Gelpermeationschromatographie-Elutionskurve zeigt eine im wesentlichen unimodale Verteilung mit einem Polydispersitätskoeffizienten von 3,9.

Beispiel 5

650 Teile Butadien und 416 Teile Styrol werden mit 164 Teilen des Thiuramdisulfids aus Beispiel 1 im Druckrührkessel 6 h bei 90 °C und noch 2 h bei 115 °C polymerisiert. Der Anfangsdruck betrug dabei 9 bar. Man erhält 662 Teile eines klaren, bernsteinfarbenen Harzes mit 1,2 Äq/kg basischem Stickstoff.

Beispiel 6

606 Teile Butadien und 166 Teile Styrol werden mit 66 Teilen des Thiuramdisulfids gemäß Beispiel 1 42 h lang bei 90 °C und 8 h bei 100 °C umgesetzt. Der Druck fällt dabei von 11 auf 4 bar (jeweils bei 90 °C). Nach Filtration verbleibt ein unlöslicher Rückstand von 7 Teilen. Man erhält 620 Teile eines Harzes mit 0,38 Äq/kg basischem Stickstoff.

Beispiel 7

130 Teile Styrol werden mit 160 Teilen Butylacrylat (jeweils frisch destilliert) in einem Dreihalskolben mit Tropftrichter, Rührer und absteigendem Kühler vorgelegt. Man heizt auf 100 °C und tropft dann über 13 h eine Lösung von 50 Teilen des Thiuramdisulfids aus Beispiel 1 in 1500 Teilen Chloroform und 12,5 Teilen Hydroxyäthylacrylat zu, während man einen schwachen Stickstoffstrom über das Gemisch leitet. Man hält die Innentemperatur auf 100 °C, so daß das Chloroform laufend aus dem Reaktionsgefäß abdestilliert. Nach Beendigung der Zudosierung läßt man noch 6 Stunden weiterreagieren und destilliert anschließend die Monomeren im Vakuum ab. Es verbleiben 178 Teile eines Harzes, welches man zur weiteren Reinigung in 200 Teilen Toluol löst und in 4 l niedrigsiedendem Petroläther wieder ausfällt. Nach Trocknung verbleiben 160 Teile eines Polymeren mit 1,6 Äq/kg basischem Stickstoff und 2,2 Äq/kg Hydroxylgruppen.

Beispiel 8

38,4 Teile Butylmethacrylat und 1,16 Teile Hydroxyäthylacrylat werden mit 2,5 Teilen des Thiuramdisulfids aus Beispiel 1 unter Stickstoff bei 100 °C 22 Stunden lang polymerisiert. Nach Filtration der Lösung und Abdestillieren der Restmonomeren erhält man 22,2 Teile eines Harzes mit 0,64 Äq/kg basischem Stickstoff und 1 Äq/kg Hydroxylgruppen. Der Schwefelgehalt wird zu 1,8 % bestimmt. Die Gelpermeationschromatographie-Elutionskurve ist im wesentlichen unimodal.

Beispiel 9

90 Teile Xylol werden in einem Dreihalskolben mit Rührer, Tropftrichter, Kolonne und absteigendem Kühler vorgelegt und im schwachen Stickstoffstrom bis zum Siedepunkt des Xylols erhitzt. Sodann tropft man eine Mischung aus 9,2 Teilen Thiuramdisulfid nach Beispiel 1, 104 TeilenStyrol und 300 Teilen Chloroform über 4 Stunden zu, wobei das Chloroform laufend abdestilliert. Die Innentemperatur steigt allmählich von 127 auf 145 °C. Man behält die erreichte Temperatur noch 30 min. bei und destilliert dann Xylol und Styrol bei vermindertem Druck ab. Es verbleiben 50 Teile eines Polymeren mit 1 Äq/kg basischem Stickstoff. Die Molekulargewichtsverteilung weist eine Schulter im Oligomerbereich auf.

Beispiel 10

32 Teile Vinyltoluol werden mit 5,1 Teilen des Initiators aus Beispiel 1 2 Stunden lang bei 110 °C polymerisiert. Nach 10 min. ist der Initiator gelöst. Das Restmonomere wird unter vermindertem Druck abdestilliert. Es bleiben 18,8 Teile eines Polymeren mit 1,3 Äquivalent Amin/kg und einer im wesentlichen unimodalen Molekulargewichtsverteilung.

Beispiel 11

34,65 Teile 4-Chlorstyrol werden mit 5,1 Teilen des Initiators aus Beispiel 1 2,5 Stunden lang bei 110 °C polymerisiert. Überschüssiges Monomeres wird bei vermindertem Druck abdestilliert. Man erhält 27,5 Teile eines Polymeren mit 0,94 Äqu Amin/kg.

Beispiel 12

26,3 Teile 2-Vinylpyridin werden mit 5,1 Teilen des Initiators aus Beispiel 1 2,5 Stunden lang bei 110 °C polymerisiert.
Man erhält 17,5 Teile eines dunklen Polymeren mit im wesentlichen unimodaler Molekulargewichtsverteilung.

Beispiel 13 Blockcopolymerisation mit Methylmethacrylat und einem Polymeren gemäß Beispiel 5

Ein Polymeres gemäß Beispiel 5 aus Butadien und Styrol im Molverhältnis 3 : 1, jedoch mit zahlenmittlerem Molekulargewicht um 3000, wird zu 2 Teilen in 20 Teilen Methylmethacrylat gelöst und 8 Stunden mit einer Quecksilberhochdrucklampe im Duranglasgefäß bestrahlt. Nach Verdampfen des Restmonomeren unter vermindertem Druck blieben 8,8 Teile eines Polymeren mit gegenüber dem Ausgangspolymeren ins hochmolekulare verschobenen Molekulargewichtsverteilung und zwei Glasübergangsstufen in der Differentialthermoanalyse zwischen -45 und -22 °C bzw. 90 und 116 °C zurück. Das Produkt ist in Aceton (selektives Lösungsmittel für Polymethylmethacrylat) mizellar löslich und ergibt aus Butylacetat einen harten, glänzenden, schwach opaleszierenden Lackfilm.

Die Beispiele 14 bis 20 beschreiben die Darstellung von verschiedenen Thiuramdisulfiden und ihre Anwendung bei der Herstellung von telechelen Polymeren auf Basis Styrol.

Beispiel 14 Bis-(4(2-benzalaminoäthyl)-piperazin-l-thiocarbonyl)-disulfan

10,6 Teile Benzaldehyd werden einer Lösung von 12,9 Teilen 1-(2-Aminoäthyl)-piperazin in 24 Teilen

Wasser und 24 Teilen Äthanol zugesetzt. Unter Eiskühlung tropft man sodann langsam 7,6 Teile Schwefelkohlenstoff zu, wobei ein Niederschlag ausfällt. Dieser wird nach Verdünnen mit je 100 Teilen Wasser und Äthanol durch Zusatz von 10,1 Teilen Triäthylamin wieder in Lösung gebracht und mit 33 Teilen Kaliumhexacyanoferrat-(III) oxidiert. Das nun ausfallende Produkt wird filtriert, mehrmals mit Wasser und schließlich mit Methanol gewaschen und bei 30 °C im Vakuum getrocknet. Man erhält 26 Teile einer Substanz mit 56,4 % C, 6,3 % H, 14,5 % N und 21,5 % S (berechnet: 57,5 % C, 6,2 % H, 14,4 % N, 21,9 % S), welche nach IR und $^1$H-NMR der Titelverbindung entspricht.

5 Teile dieser Substanz werden mit 26 Teilen Styrol 2 Stunden auf 110 °C erhitzt, wobei der Initiator unter Bildung eines dunkelbraunen Produktes rasch in Lösung geht. Nach Destillation bei vermindertem Druck verbleiben 12 Teile eines dunkelbraunen, festen Harzes mit 2,8 Äq/kg basischen Stickstoffs, welches sich in wäßriger Essigsäure zu einer opaleszierenden, nach Benzaldehyd riechenden Dispersion löst. Das Harz zeigt in der Gelpermeationschromatographie eine unimodale Molekulargewichtsverteilung mit einem Polydispersitätskoeffizienten von 2,5.

Beispiel 15 Bis(4-(2-salicylaminoäthyl)-piperazin-l-thiocarbonyl)-disulfan

6,1 Teile Salicylaldehyd und 6,4 Teile l-Aminoäthylpiperazin werden in 100 Teilen eines 50/50 Wasser/Äthanol-Gemisches gelöst und mit 3,8 Teilen Schwefelkohlenstoff versetzt. Nach Oxidation mit 16,4 Teilen Kaliumhexacyanoferrat-(III) erhält man 12,6 Teile einer Verbindung mit 54,4 % C, 6,1 % H, 13,6 % N und 19,6 % S (berechnet: 54,5 % C, 5,9 % H, 13,6 % N, 20,8 % S).

26 Teile Styrol werden mit 5 Teilen dieser Verbindung 3 Stunden auf 110 °C erhitzt. Man erhält nach Filtration und Destillation bei reduziertem Druck 16 Teile eines in verdünnter wäßriger Essigsäure löslichen Polymeren mit im wesentlichen unimodaler Molekulargewichtsverteilung.

Beispiel 16 Bis(3-carboxyl-piperidin-l-thiocarbonyl)-disulfan

7,9 Teile Piperidin-3-carbonsäureäthylester werden zu einer Lösung von 2 Teilen Natriumhydroxid in 60 ml Wasser gegeben. Nach Zusatz von 4,2 Teilen Schwefelkohlenstoff und weiteren 2 Teilen Natriumhydroxid oxidiert man mit 16,5 Teilen Kaliumhexacyanoferrat-(III). Nach Ansäuern mit l n HCl fällt ein Niederschlag aus, welcher nach einiger Zeit kristallin wird. Man erhält 7,7 Teile einer Substanz mit 41,3 % C, 5 % H und 7,3 % N (berechnet: 41,1 % C, 4,9 % H und 6,9 % N, 31,4 % S).

1 Teil dieser Verbindung wird mit 10 Teilen Styrol 3 1/2 Stunden bei 110 °C umgesetzt. Man erhält 4,3 Teile eines Polymeren mit unimodaler Molekulargewichtsverteilung,2,4 % Schwefel und 0,24 Äq/kg Carbonsäuregruppen.

Beispiel 17 Bis-(4-Methylpiperazin-l-thiocarbonyl)-disulfan

5 Teile N-Methylpiperazin werden in 100 Teilen Wasser mit 2 Teilen Natriumhydroxid und 4,2 Teilen Schwefelkohlenstoff umgesetzt und mit 16,5 Teilen Kaliumhexacyanoferrat-III oxidiert. Man erhält 8,6 Teile der Verbindung mit 41,1 % C, 6,5 % H, 15,7 % N (berechnet: 41,1 % C, 6,3 % H, 16,0 % N, 36,6 % S).

Die Polymerisation von 1 Teil dieser Verbindung mit 10 Teilen Styrol (2 h, 110 °C) liefert 5,6 Teile eines Polymeren mit bimodaler Molekulargewichtsverteilung (Schulter im hochmolekularen Bereich) mit 5,3 % S und 0,82 Äq/kg basischem Amin.

Beispiel 18 Bis-(4-piperidon-l-thiocarbonyl)-disulfan

7,9 Teile 4-Piperidonhydrathydrochlorid werden mit 4 Teilen Natriumhydroxid und 4,2 Teilen Schwefelkohlenstoff in 100 Teilen Wasser umgesetzt und mit Kaliumhexacyanoferrat-(III) oxidiert. Man erhält 8,2 Teile einer Verbindung mit 40,7 % C, 4,6 % H und 7,6 % N (berechnet: 41,4 % C, 4,6 % H, 8,0 % N, 36,8 % S).

2 Teile dieser Verbindung werden mit 20 Teilen Styrol 3,5 h bei 110 °C polymerisiert. Dabei entstehen 9,9 Teile eines Polymeren mit 4,2 % Schwefel mit deutlicher Carbonylbande im IR bei 1730/cm.

Beispiel 19 Thiuramdisulfid aus Piperazin und Schwefelkohlenstoff

82,3 Teile Piperazin werden in 350 Teilen Äthanol mit $CO_2$ umgesetzt. Der Niederschlag wird abfiltriert und getrocknet, dann gelöst in 400 Teilen Wasser und unter Kühlung versetzt mit 70,3 Teilen Schwefelkohlenstoff.

Der entstehende Niederschlag wird wiederum filtriert und im Luftstrom getrocknet. Man erhält 99,4 Teile einer Substanz mit 35,9 % C, 6,2 % H, 16,8 % N und 33,4/33,6 % S. 81,2 Teile davon werden mit 20 Teilen Natriumhydroxid in 600 Teilen Wasser gelöst und mit 164,6 Teilen Kaliumhexacyanoferrat-(III) in weiteren 600 Teilen Wasser oxidiert. Man erhält nach Filtration und Trocknung 61,5 Teile einer in Chloroform und wäßriger Essigsäure weitgehend löslichen Substanz mit 34,1 % C, 5,2 % H, 16,0 % N, 35,0 % S.

7 Teile dieser Substanz werden in 150 Teilen Chloroform gelöst, gegebenenfalls unlösliche Anteile (1,9 Teile) durch Filtration abgetrennt, und die Lösung über 105 Minuten lang gleichmäßig zu 52 Teilen Styrol bei 110 °C zugetropft. Durch einen absteigenden Kühler destilliert man das Chloroform sofort aus dem Polymerisationsgefäß ab. Nach weiteren 105 Minuten bei 110 °C läßt man abkühlen und trennt gegebenenfalls ausfallende unlösliche Anteile ab (ca. 0,2 Teile). Das Filtrat wird unter vermindertem Druck von überschüssigem Monomeren befreit. Es verbleiben 20,1 Teile eines Polymeren mit 0,91 Äquivalenten Amin pro kg und nach Gelpermeationschromatographie unimodaler Molekulargewichtsverteilung.

Beispiel 20 Thiuramdisulfid aus einem Piperazin-Äthylencarbonat-Umsetzungsprodukt und Schwefelkohlenstoff

43 Teile Piperazin werden in 250 Teilen Wasser gelöst und mit 44 Teilen Äthylencarbonatschmelze versetzt. Nach Abdampfen des Wassers unter vermindertem Druck bleiben 84 Teile einer klaren, zähflüssigen Substanz. Davon werden 76 Teile mit 74 Teilen Schwefelkohlenstoff in 200 Teilen Wasser unter Eiskühlung umgesetzt. Der entstehende Niederschlag wird durch Zusatz von 44,4 Teilen Triäthylamin wieder in Lösung gebracht und der überschüssige Schwefelkohlenstoff im Scheidetrichter abgetrennt. Nach Abdestillieren des Wassers unter vermindertem Druck verbleibt eine ölige gelbe Flüssigkeit. 35 Teile davon werden unter Zusatz eines weiteren Teiles Triäthylamin wiederum in 300 ml Wasser gelöst und mit 32,9 Teilen Kaliumhexacyanoferrat-(III) in 200 Teilen Wasser oxidiert. Man erhält 24,5 Teile einer Substanz mit 36,2 % C, 5,3 % H, 11,0 % N, und 32,3 % S.

2 Teile davon werden mit 20 Teilen Styrol auf 110 °C unter Rühren erhitzt. Nach 90 min. ist eine klare Lösung entstanden, welche weitere 90 min. bei 110 °C belassen wird. Das Polymere wird durch Eingießen der Lösung in die 10-fache Menge Methanol in Form von 10,9 Teilen eines blaßgelben Pulvers gewonnen, welches nach Gelpermeationschromatographie eine unimodale Molekulargewichtsverteilung mit $\overline{M}_n$ um 3000 g/Mol und $\overline{M}_w$ um 9000 g/Mol besitzt. Aus dem Schwefelgehalt von 4,3 %/4,5 % errechnet sich ein $\overline{M}_n$ von 2900 g/Mol. Das IR-Spektrum zeigt deutlich eine Absorptionsbande bei 3500 $cm^{-1}$ (Hydroxy) und bei 1700 $cm^{-1}$ (Urethan-Carbonyl).

Die Beispiele 2l bis 26 beschreiben die Darstellung verschiedener Dithiocarbamate und ihre Anwendung bei der Herstellung von telechelen Polymeren.

Beispiel 21 Bis-(4-(2-hydroxyäthyl)-piperazin-1-thiocarbonyl)-α,α′dithioxylylen

Das Natriumsalz eines 1 : 1 Adduktes aus N-(2-hydroxyäthyl)piperazin und Schwefelkohlenstoff wird zu 45,6 Teilen in einem siedenden Gemisch von 450 Teilen Methanol und 180 Teilen Aceton unter Rückfluß gelöst. Dazu tropft man langsam eine Lösung von 17,5 Teilen p-Xylylendichlorid in 90 Teilen Aceton. Man läßt noch 2 Stunden weiter unter Rückfluß reagieren und destilliert dann unter vermindertem Druck die Lösungsmittel ab. Das Produkt wird in Wasser chloridfrei gewaschen und aus Toluol kristallisiert. Man erhält 34,2 g einer Verbindung mit der Zusammensetzung 51,6 % C, 6,8 % H, 10,8 % N, 24,9 % S (berechnet: 51,3 % C, 6,7 % H, 10,9 % N, 24,9 % S).

25 Teile dieser Verbindung werden mit llO Teilen Styrol in einem Gemisch aus 300 Teilen Dichlormethan und 45 Teilen Äthanol unter Erwärmen gelöst. Man bestrahlt das Gemisch unter Umwälzung in einem Photoreaktor mit einer 100 W-Quecksilberhochdrucklampe 22 h lang bei 30 °C. Nach dem Filtrieren und Einengen fällt man das Polymere mit Methanol aus und wäscht mehrmals ebenfalls mit Methanol gründlich nach. Die vereinigten Waschflüssigkeiten enthalten 5 Teile einer Verbindung, welche nach Gelpermeationschromatographie-Elutionsvolumen und IR-Spektrum identisch mit dem Thiuramdisulfid aus

Beispiel 1 ist. Es verbleiben 27 Teile eines Polymeren mit Molekulargewicht um 1650 (Zahlenmittel, Dampfdruckosmose), 6,8 % Schwefel und 0,7 Äq/kg basischem Amin.

1,3 Teile des Dithiocarbamats aus diesem Beispiel werden in 28 Teilen Dichlormethan gelöst und nach Zusatz von 9,3 Teilen Itaconsäurediäthylester 24 Stunden mit einer 100 W Quecksilberhochdrucklampe bestrahlt. Danach ist in der Gelpermeationschromatographie-Elutionskurve das Signal des Initiators verschwunden und Polymeres neben einer niedermolekularen Verbindung, welche wahrscheinlich mit dem Thiuramdisulfid aus Beispiel 1 identisch ist, entstanden. Das Produkt wird durch Fällen in Petroläther isoliert und man erhält 5,1 Teile einer Substanz, welche nach präparativer Gelpermeationschromatographie zu 80 % aus Polymeren mit 0,25 Äq/kg basischem Stickstoff besteht.

<u>Beispiel</u> <u>22</u> Bis-(dihydroxyäthyldithiocarbamoyl)-p-Xylylen

16 Teile Natriumhydroxid werden in 225 Teilen Äthanol gelöst, mit 42 Teilen Diäthanolamin gemischt und innerhalb 45 Minuten mit 32 Teilen Schwefelkohlenstoff versetzt. Nach 1 Stunde erwärmt man auf 70 °C und tropft 35 Teile Xylylendichlorid, gelöst in 320 Teilen Toluol, zu. Die Reaktionstemperatur wird noch 2 h beibehalten, wobei sich ca. 23 Teile Natriumchlorid abscheiden. Nach Abdestillieren der Lösungsmittel unter vermindertem Druck verbleiben 94 Teile eines braunen Öls mit der Zusammensetzung 47,5 % C; 6,4 % H; 6,5 % N und 26,9 % S (berechnet: 46,5 % C; 6,1 % H; 6,0 % N und 27,6 % S). Präparative Gelpermeationschromatographie zeigt das Vorliegen von etwa 50 % der Titelverbindung neben verschiedenen Fragmentierungsprodukten. Die Titelverbindung kristallisiert nach längerem Stehen.

20,7 Teile des öligen Rohproduktes
werden mit 110 Teilen Styrol in 308 Teilen Dichlormethan und 27 Teilen Äthanol im Umwälzphotoreaktor 22 h bestrahlt. Danach zeigt die Gelpermeationschromatographie-Elutionskurve die völlige Zersetzung des Initiators an. Nach Abtrennung ausgefallener Bestandteile wird die Lösung unter verminderten Druck eingeengt und in Methanol ausgefällt. Man erhält 30 g eines Polymeren mit Molekulargewicht 2200 (Dampfdruckosmose), 5,7 % Schwefel und 2 Äq Hydroxylgruppen/kg.

<u>Beispiel</u> <u>23</u> Bis-(methyl-2-hydroxyäthyldithiocarbamoyl)-p-Xylylen

48,5 Teile Natrium-(N-methyl-N-2-hydroxyäthyl)-dithiocarbamat werden in 320 Teilen Methanol und 180 Teilen Aceton in der Wärme gelöst. Dazu tropft man unter Rückfluß eine Lösung von 24,5 Teilen p-Xylylendichlorid in 135 Teilen Aceton. Nach 2 Stunden filtriert man die Lösung, wobei 14 Teile Natriumchlorid abgetrennt werden. Die Lösung wird eingeengt und das Produkt aus Toluol kristallisiert. Man erhält 35,2 Teile einer Substanz mit 47,7 % C; 6,1 % H; 6,8 % N und 31,5 % S (berechnet: 47,5 % C; 6,0 % H, 6,9 % N; 31,8 % S).

19,5 Teile dieser Verbindung werden in einem Gemisch aus 280 Teilen Dichlormethan und 70 Teilen Äthanol in der Wärme gelöst, 110 Teile Styrol zugesetzt und im Umwälzphotoreaktor bei 25 °C 24 h lang polymerisiert.

Nach Einengen und Ausfällen in Methanol erhält man 38 Teile eines Polymeren mit 7,3 % Schwefel, osmotisch bestimmtem Molekulargewicht um 2000 g/mol und 0,7 Äq/kg Hydroxylgruppen.

<u>Beispiel</u> <u>24</u> Bis-(4-methylpiperazinyl-l-thiocarbonyl)-dithioxylylen

4 Teile NaOH werden in 90 Teilen Äthanol gelöst, 10 Teile N-Methylpiperazin zugesetzt und 7,6 Teile Schwefelkohlenstoff langsam zugetropft. Man erhitzt bis zum Sieden unter Rückfluß und tropft 8,75 Teile Xylylendichlorid zu. Nach 2 h filtriert man den Niederschlag ab, wäscht gründlich mit Wasser, um Natriumchlorid zu entfernen und trocknet bei 50 °C im Vakuum. Man erhält 18,7 Teile einer Verbindung mit 52,7 % C; 6,8 % H; 12,2 % N und 27,8 % S (berechnet: 52,8 % C; 6,7 % H; 12,3 % N; 28,2 % S).

2,3 Teile der aus Beispiel 24 erhaltenen Verbindung werden in 28 Teilen Dichlormethan gelöst, mit 10,4 Teilen Styrol versetzt und 42 h lang mit der 100 W Quecksilberhochdrucklampe bestrahlt. Die Lösung wird filtriert, eingeengt und in Methanol ausgefällt. Es verbleiben 6,7 Teile Polymeres mit 0,9 Äq/kg basischem Stickstoff.

<u>Beispiel</u> <u>25</u> Äthylenglykol-bis-N-piperazinyl-thiocarbonylthioessigsäureester

192 Teile Piperazin werden in 500 Teilen Wasser teilweise gelöst. Dann tropft man 22,8 Teile Schwefelkohlenstoff über 1 1/2 Stunden zu, wobei sich der Piperazinbodenkörper löst. Nach einer Stunde dampft man die Lösung zur Trockne ein. Den Festkörper wäscht man gründlich mit Äthanol, um überschüssiges Piperazin zu entfernen, und erhält 58 Teile des Piperaziniumsalzes des Piperazinyl-dithiocarboxylats.

Die Analyse ergibt die Zusammensetzung 43,6 % C; 8,1 % H; 22,2 % N; 26,0 % S (berechnet: 43,6 % C; 8,1 % H; 22,6 % N; 25,8 % S). 12,5 Teile dieser Substanz werden mit 2 Teilen Natriumhydroxid in 100 ml Äthanol gelöst und langsam bei 0 °C mit 5,4 Teilen Äthylenglykol-bis-chloressigsäureester versetzt. Nach 1 h trennt man den gebildeten Niederschlag ab (2,4 Teile Natriumchlorid), engt das Filtrat unter vermindertem Druck ein, nimmt auf in Chloroform und schüttelt mit Wasser mehrmals aus. Nach Abdampfen des Chloroforms verbleiben 8,7 Teile einer zunächst wachsartigen Substanz der Zusammensetzung 43,1 % C; 6,5 % H; 11,4 % N; 26,2 % S (berechnet: 41,2 % C; 5,6 % H; 12,0 % N; 27,5 % S).

1,5 Teile dieser Verbindung werden mit je

4,5 Teilen Styrol und Methylmethacrylat in 22,5 Teilen Chloroform gelöst und 18 h unter UV-Bestrahlung (100 W-Quecksilberhochdrucklampe) polymerisiert. Nach Abdampfen flüchtiger Anteile unter vermindertem Druck wäscht man mit Methanol und erhält 3,4 g eines Polymeren mit 3,5 % Schwefel und 0,4 Äq/kg basischem Stickstoff.

Beispiel 26 Trimethylolpropan-tris-N-piperazinyl-thiocarbonyl-thioessigsäureester

8,2 Teile des 2 : 1 Adduktes aus Piperazin und Schwefelkohlenstoff (vgl. Beispiel 25, Teil 1) werden mit 1,6 Teilen Natriumhydroxid in 90 Teilen Äthanol gelöst. Bei 0 °C gibt man dann 4,7 Teile Trimethylolpropan-tris(chloracetat) zu. Nach mehreren Stunden bei Raumtemperatur filtriert man ab (Rückstand 2,2 Teile Natriumchlorid), engt ein, nimmt auf in Chloroform, schüttelt mit Wasser mehrmals aus und zieht das Chloroform unter vermindertem Druck ab. Es bleiben 8,1 Teile einer gelben, öligen Flüssigkeit, welche nach Zugabe von Petroläther kristallin wird. Nach Filtration und Trocknung verbleiben 7,8 Teile einer Verbindung mit 43,6 % C; 6,6 % H; 11,4 % N; 25,6 % S (berechnet: 43,8 % C; 6,0 % H; 11,3 % N; 26,0 % S).

4 Teile dieser Verbindung werden mit Essigsäure neutralisiert und in 320 Teilen Wasser gelöst. Nach Zusatz von 45 Teilen Styrol bestrahlt man im Umwälzphotoreaktor 20 Stunden lang bei Raumtemperatur. Es bildet sich eine Emulsion neben einigem koagulierten Polymeren, welche aber durch Erwärmen zum Siedepunkt bricht. Das Wasser wird dekantiert und der Rückstand mit Methanol behandelt. Nach Trocknung verbleiben 24 Teile eines Polymeren mit 2 % Schwefel.

Die Beispiele 27 bis 30 betreffen Verwendungen der erfindungsgemäßen telechelen Polymeren.

Beispiel 27

82 Teile eines telechelen Copolymeren aus Butadien und Styrol gemäß Beispiel 6 werden mit 3,12 Teilen N-Phenyldiisopropanolamin 1 Stunde bei 100 °C unter Rühren bei 2 mm Hg von flüchtigen Anteilen befreit, dann auf 80 °C abkühlen gelassen. 5,35 Teile Bis-1,4-isocyanatocyclohexan werden darin unter weiterer Durchmischung aufgeschmolzen. Nach kurzem Entgasen in Vakuum gießt man die Mischung in vorgeheizte, mit Trennmittel belegte Aluminiumformen und läßt 24 h unter trockenem Stickstoff bei 100 °C aushärten.

Das entstehende Elastomere hat eine Reißdehnung von 549 % bei einer Reißkraft von 4,3 $N/mm^2$. Nach 5 Extensionen auf 300 % stellt man eine bleibende Dehnung von 50 % fest. Das Kraftverhältnis Entlastung zu Belastung bei 200 % Dehnung nach den 4. Lastwechsel beträgt 75 %.

Beispiel 28

22 Teile des Polymeren aus Beispiel 5 werden mit 5 Teilen Methyläthylketon gelöst, und mit 2,5 Teilen Milchsäure neutralisiert. Unter kräftigem Rühren setzt man nun 150 Teile demineralisiertes Wasser zu. Man erhält eine milchige wäßrige Dispersion des Polymeren, welche sich auch innerhalb mehrerer Monate nicht absetzt. Man taucht ein entfettetes Eisenblech, welches mit dem negativen Pol einer Spannungsquelle verbunden ist, sowie eine entsprechende Gegenelektrode zur elektrophoretischen Abscheidung in die Dispersion ein. Nach Anlegen einer Spannung von 145 V hat sich nach einer Minute ein praktisch

stromundurchlässiger Lack-Film auf dem als Kathode geschalteten Blech abgeschieden, welcher mit demineralisiertem Wasser gespült und dann 30 min. bei 180 °C eingebrannt wird. Man erhält einen braunen, harten Überzug mit einer Schichtdicke von 18 µm.

Beispiel 29

Zur Herstellung eines 2-Komponenten-Acrylharzlacks werden 18,3 Teile des Polymeren gemäß Beispiel 3 mit 8 Teilen Toluol gelöst und mit 7,8 Teilen Desmodur N 75 gut vermischt. Mit einem Filmziehgerät werden Lack-Filme auf entfettete Eisenbleche aufgebracht. Nach 24 h bei Raumtemperatur hat sich ein Film mit 74 sec. Pendelhärte nach König gebildet, welcher mit einem mit Methyl-isobutylketon befeuchteten Läppchen auch nach 100 Reibbewegungn nicht abgelöst wird. Ein 2 Stunden bei 100 °C eingebrannter Film hat eine Pendelhärte nach König von 157 sec.

Beispiel 30

Zur Herstellung eines 2-Komponenten-Acrylharzlacks werden 15 Teile eines Harzes nach Beispiel 7 mit je 5 Teilen Xylol und Butylacetat gelöst und mit 5,85 Teilen Desmodur N 75 vermischt. Mit einem Filmziehgerät trägt man Schichten von 100 µm auf blankes Eisenblech, Zinkphosphatblech, feuerverzinktes Blech und Aluminiumblech auf. Man erhält nach 24 h Trocknung bei Raumtemperatur Filme von 139 s bzw. nach einer Woche von l65 s Pendelhärte nach König. Bei 100 °C 1 h lang eingebrannte Filme zeigen eine Härte von 171 s. Sie haben auf allen Substraten gute Haftung (Gitterschnittprüfung: O), keine Risse im Dornbiegetest und ausgezeichnete Beständigkeit gegen Xylol, Benzin und Methylisobutylketon.

## Ansprüche

1. Telechele Polymere auf Basis von mittels Dithiocarbamat-Initiatoren radikalisch polymerisierten äthylenisch ungesättigten Monomeren der allgemeinen Formel

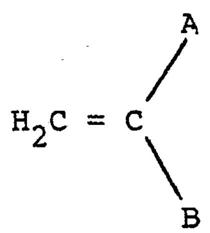 (IX) A-CH=CH-B (X)

A = H, $CH_3$, Cl, CN, COOR, $CH_2$-COOR
B = COOR, $CH=CH_2$, Cl, CN, $C_6H_5$, $C_6H_4Cl$, para-Toluyl, Chlor-Toluyl, pyridyl,
R = Alkylrest mit 1 - 12 C-Atomen

die durch Polymerisation mittels Thiuramdisulfiden und/oder Estern der Dithiocarbamidsäure erhalten werden, welche neben der Carbamat-Gruppierung eine oder mehrere weitere funktionelle reaktive Gruppe(n) aufweisen, dadurch gekennzeichnet, daß sie durch Polymerisation mit solchen Thiuramdisulfiden und/oder Dithiocarbamaten erhalten werden, die als weitere funktionelle, chemisch reaktive Gruppe(n) Amino-, Hydroxy-, Carboxyl- und/oder Carbonylgruppen aufweisen, jedoch nicht mit Bis-(N-methyl-N-hydroxyethyl)-thiuramdisulfid, wenn Wasserstoffperoxid als zusätzlicher Initiator verwendet wird.

2. Telechele Polymere nach Anspruch 1, dadurch gekennzeichnet, daß sie durch Polymerisation mit Thiuramdisulfiden und Dithiocarbamaten der allgemeinen Formel

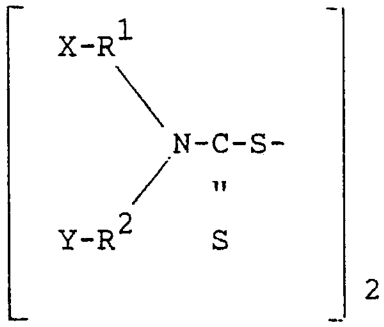

und

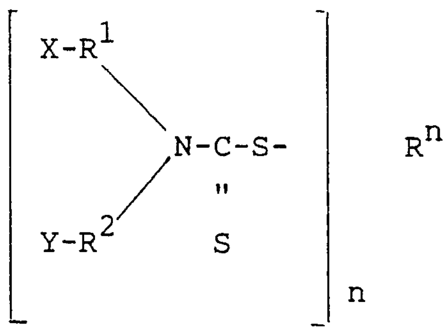

(I) (II)

erhalten werden, worin

X, Y = H, COOH, $NR^3R^4$, $\overset{\oplus}{N}R^3R^4R^5$, OH, 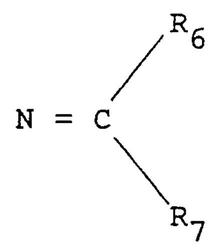

X ≠ H, wenn Y = H
Y ≠ H, wenn X = H

$R^1$, $R^2$ = Alkylen mit 1 bis 10 Kohlenstoffatomen, Cycloalkylen mit 5 bis 10 Kohlenstoffatomen

$R^3$, $R^4$, $R^5$ = H, Alkylrest mit 1 bis 18 Kohlenstoffatomen,

$R^6$, $R^7$ = H, aromatischer Rest mit 6 bis 10 Kohlenstoffatomen, cycloaliphatischer Rest mit 5 bis 10 Kohlenstoffatomen, aliphatischer Rest mit 1 bis 6 Kohlenstoffatomen
$R^6$ ≠ H, wenn $R^7$ = H
$R^7$ ≠ H, wenn $R^6$ = H

$R^n$ = n-wertiger organischer Rest mit einer bis n Methylengruppe(n), welche in α-Stellung zu einer Carbonylgruppe oder zu einem Kohlenstoffatom eines aromatischen Ringsystems stehen, wobei der organische Rest $R^n$ über eine solche Methylengruppe mit dem Dithiocarbamat-Schwefelatom gemäß Formel (II) verbunden ist,

n = ganze Zahlen von 1 bis 4

bedeuten, oder in welchen die Gruppierung

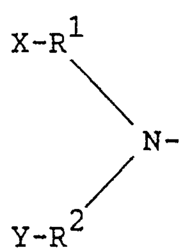

einen heterocyclischen Ring (III) bildet

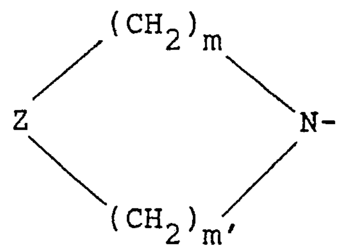

(III)

mit Z = NH, $NR^1$-X, C=O, CH-W W = COOH, COOR, OH, $R^1OH$
und m = ganze Zahlen von 1 bis 3
sowie m' = Null und ganze Zahlen von 1 bis 3.

**3.** Telechele Polymere nach Anspruch 2, dadurch gekennzeichnet, daß $R^1$ und $R^2$ einen Alkylen-Rest mit 1 bis 3 Kohlenstoffatomen bedeuten.

**4.** Telechele Polymere nach einem oder mehreren der Ansprüche 2 und 3, dadurch gekennzeichnet, daß X und Y einen Wasserstoffrest und/oder die funktionellen Gruppen
OH, $NR^3R^4$ und

$$\overset{\oplus}{N}R^3R^4R^5$$

mit $R^3$, $R^4$ und $R^5$ = H und $C_1$-$C_4$-Alkyl bilden.

**5.** Telechele Polymere nach Anspruch 2, dadurch gekennzeichnet, daß sie durch Polymerisation mit Thiuramdisulfiden der allgemeinen Formel (I) erhalten werden, in welcher die Gruppierung X-$R^1$-N-$R^2$-Y den heterocyclischen Ring (III) bildet mit m und m' = 2, Z = NH oder $NR^1X$ mit X = OH, $NH_2$ und N = CH-Ar sowie $R^1$ und $R^2$ als Alkylenresten mit 1 bis 3 Kohlenstoffatomen.

**6.** Telechele Polymere nach Anspruch 1, dadurch gekennzeichnet, daß sie aus radikalisch polymerisierten vinylaromatischen Verbindungen und/oder Estern der Acrylsäure und/oder Estern der Methacrylsäure als äthylenisch ungesättigten Monomeren aufgebaut sind.

**7.** Telechele Polymere nach Anspruch 6, dadurch gekennzeichnet, daß die vinylaromatischen Verbindungen Styrol, p-Methylstyrol, p-Chlorstyrol, Chlormethylstyrol und/oder 2-Vinylpyridin sind.

**8.** Telechelen Polymere nach Anspruch 1, dadurch gekennzeichnet, daß sie aus Styrol und konjugierte Dienen als äthylenisch ungesättigten Monomeren aufgebaut sind.

**9.** Verfahren zur Herstellung von telechelen Polymeren nach einem oder mehreren der Ansprüche 1 bis 8, dadurch gekennzeichnet, daß man die entsprechenden äthylenisch ungesättigten Monomeren in Gegenwart der Initiatoren aus der Gruppe der Thiuramdisulfide und Dithiocarbamate welche neben der Carbamat-Gruppierung eine oder mehrere der genannten weitere funktionelle reaktive Gruppe(n) aufweisen, radikalisch bei einer Temperatur zwischen -50 und 200 °C polymerisiert.

**10.** Verfahren nach Anspruch 9, dadurch gekennzeichnet, daß man bei einer Temperatur zwischen 70 und 150 °C polymerisiert.

**11.** Verfahren nach Anspruch 9, dadurch gekennzeichnet, daß man photolytisch bei einer Temperatur zwischen -10 und 150 °C polymerisiert.

**12.** Verfahren nach einem oder mehreren der Ansprüche 9 bis 11, dadurch gekennzeichnet, daß man in Abwesenheit eines Lösungsmittels polymerisiert.

**13.** Verfahren nach einem oder mehreren der Ansprüche 9 bis 11, dadurch gekennzeichnet, daß man bis zu

einem Zeitpunkt polymerisiert, an dem 30 bis 90% der äthylenisch ungesättigten Monomeren umgesetzt sind, und anschließend die nichtumgesetzten Monomeren vom Polymerisat durch Extraktion mittels eines geeigneten Lösungsmittels oder durch Destillation, gegebenenfalls unter vermindertem Druck, abtrennt.

**14.** Verfahren nach einem oder mehreren der Ansprüche 9 bis 11, dadurch gekennzeichnet, daß man in Gegenwart von Wasser als Reaktionsmedium polymerisiert.

**15.** Verfahren nach einem oder mehreren der Ansprüche 9 bis 11 , dadurch gekennzeichnet, daß in Gegenwart von 2 bis 30 Gew.-% Initiator, bezogen auf das Gewicht der äthylenisch ungesättigten Monomeren, polymerisiert wird.

**16.** Verwendung von telechelen polymeren nach einem oder mehreren der Ansprüche 1 bis 9 als reaktive Vorstufe zum Aufbau höherpolymerer linearer oder vernetzter Produkte.

**17.** Verwendung von telechelen Polymeren nach einem oder mehreren der Ansprüche 1 bis 9 als Bestandteil von wäßrigen Lösungen, Emulsionen, Dispersionen und Suspensionen.

**18.** Verwendung von telechelen Polymeren nach einem oder mehreren der Ansprüche 1 bis 9 zur Herstellung wäßriger Lösungen, Emulsionen, Dispersionen und Suspensionen von aus diesen telechelen Polymeren resultierenden höherpolymeren linearen oder vernetzten Produkten.

**19.** Verwendung von telechelen Polymeren nach einem oder mehreren der Ansprüche 1 bis 9 als reaktive Vorstufe von höherpolymeren linearen oder vernetzten Bindemitteln in wäßrigen Anstrichmittel-Systemen.

**20.** Verwendung von telechelen Polymeren nach einem oder mehreren der Ansprüche 1 bis 9, in wäßrigen Systemen zur elektrophoretischen Abscheidung von Beschichtungen.

**21.** Verwendung von telechelen Polymeren nach einem oder mehreren der Ansprüche 1 bis 9, nach elektrophoretischer Abscheidung in wäßrigen Systemen als reaktive Vorstufe von höherpolymeren linearen oder vernetzten Beschichtungen.

**22.** Verwendung von telechelen Polymeren nach einem oder mehreren der Ansprüche 1 bis 9 zur Herstellung von Elastomeren.

**23.** Verwendung von telechelen Polymeren nach einem oder mehreren der Ansprüche 1 bis 9 zur Modifizierung von Oberflächen.

Patentansprüche für folgenden Vertragsstaat : ES

**1.** Verfahren zur Herstellung von telechelen Polymeren auf Basis von mittels Dithiocarbamat-Initiatoren radikalisch polymerisierbaren äthylenisch ungesättigten Monomeren der allgemeinen Formel

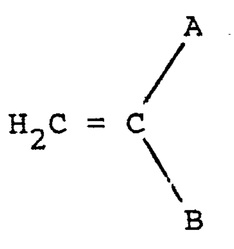 (IX)

A-CH=CH-B (X)

A = H, $CH_3$, Cl, CN, COOR, $CH_2$-COOR
B = COOR, $CH=CH_2$, Cl, CN, $C_6H_5$, $C_6H_4Cl$, para-Toluyl, Chlor-Toluyl, pyridyl,
R = Alkylrest mit 1 - 12 C-Atomen
die mittels Thiuramdisulfiden und/oder Estern der Dithiocarbamidsäure polymerisiert werden, welche neben der Carbamat-Gruppierung eine oder mehrere weitere funktionelle

reaktive Gruppe(n) aufweisen, dadurch gekennzeichnet, daß sie mit solchen Thiuramdisulfiden und/oder Dithiocarbamaten polymerisiert werden, die als weitere funktionelle, chemisch reaktive Gruppe(n) Amino-, Hydroxy-, Carboxyl- und/oder Carbonylgruppen aufweisen, jedoch nicht mit Bis-(N-methyl-N-hydroxyethyl)-thiuramdisulfid, wenn Wasserstoffperoxid als zusätzlicher Initiator verwendet wird.

**2.** Verfahren zur Herstellung von telechelen Polymeren nach Anspruch 1, dadurch gekennzeichnet, daß die Polymerisation mit Thiuramdisulfiden und Dithiocarbamaten der allgemeinen Formeln

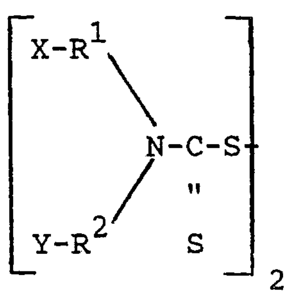

und

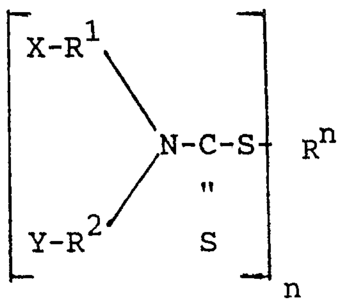

(I) (II)

durchgeführt wird, worin

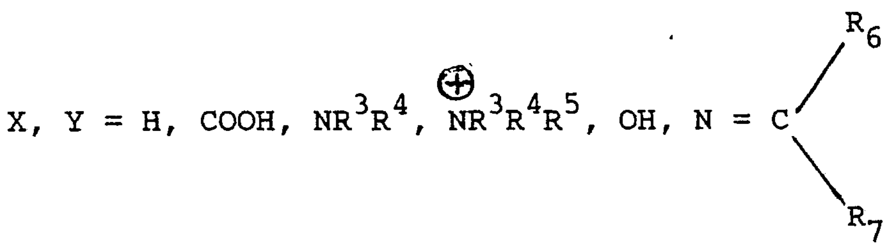

X ≠ H, wenn Y = H
Y ≠ H, wenn X = H

$R^1$, $R^2$ = Alkylen mit 1 bis 10 Kohlenstoffatomen, Cycloalkylen mit 5 bis 10 Kohlenstoffatomen

$R^3$, $R^4$, $R^5$ = H, Alkylrest mit 1 bis 18 Kohlenstoffatomen,

$R^6$, $R^7$ = H, aromatischer Rest mit 6 bis 10 Kohlenstoffatomen, cycloaliphatischer Rest mit 5 bis 10 Kohlenstoffatomen, aliphatischer Rest mit 1 bis 6 Kohlenstoffatomen
$R^6$ ≠ H, wenn $R^7$ = H
$R^7$ ≠ H, wenn $R^6$ = H

$R^n$ = n-wertiger organischer Rest mit einer bis n Methylengruppe(n), welche in α-Stellung zu einer Carbonylgruppe oder zu einem Kohlenstoffatom eines aromatischen Ringsystems stehen, wobei der organische Rest $R^n$ über eine solche Methylengruppe mit dem Dithiocarbamat-Schwefelatom gemäß Formel (II) verbunden ist,

n = ganze Zahlen von 1 bis 4

bedeuten, oder in welchen die Gruppierung

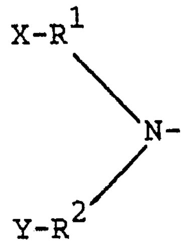

einen heterocyclischen Ring (III) bildet

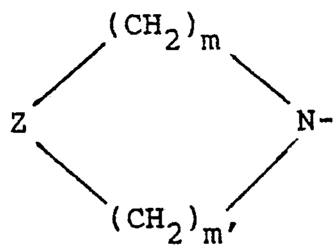

(III)

mit Z = NH, $NR^1$-X, C=O, CH-W W = COOH, COOR, OH, $R^1OH$
und m = ganze Zahlen von 1 bis 3
sowie m' = Null und ganze Zahlen von 1 bis 3.

3. Verfahren zur Herstellung von telechelen Polymeren nach Anspruch 2, dadurch gekennzeichnet, daß $R^1$ und $R^2$ einen Alkylen-Rest mit 1 bis 3 Kohlenstoffatomen bedeuten.

4. Verfahren zur Herstellung von telechelen Polymeren nach einem oder mehreren der Ansprüche 2 und 3, dadurch gekennzeichnet, daß X und Y einen Wasserstoffrest und/oder die funktionellen Gruppen OH, $NR^3R^4$ und

$$\overset{\oplus}{NR^3R^4R^5}$$

mit $R^3$, $R^4$ und $R^5$ = H und $C_1$-$C_4$-Alkyl bilden.

5. Verfahren zur Herstellung von telechelen Polymeren nach Anspruch 2, dadurch gekennzeichnet, daß man mittels Thiuramdisulfiden der allgemeinen Formel (I) polymerisiert, in welcher die Gruppierung X-$R^1$-N-$R^2$-Y den heterocyclischen Ring (III) bildet mit m und m' = 2, Z = NH oder $NR^1X$ mit X = OH, $NH_2$ und N=CH-Ar sowie $R^1$ und $R^2$ als Alkylenresten mit 1 bis 3 Kohlenstoffatomen.

6. Verfahren zur Herstellung von telechelen Polymeren nach Anspruch 1, dadurch gekennzeichnet, daß man vinylaromatische Verbindungen und/oder Ester der Acrylsäure und/oder Ester der Methacrylsäure als äthylenisch ungesättigte Monomere radikalisch polymerisiert.

7. Verfahren zur Herstellung von telechelen Polymeren nach Anspruch 6, dadurch gekennzeichnet, daß als vinylaromatische Verbindungen Styrol, p-Methylstyrol, p-Chlorstyrol, Chlormethylstyrol und/oder 2-Vinylpyridin eingesetzt werden.

8. Verfahren zur Herstellung von telechelen Polymeren nach Anspruch 1, dadurch gekennzeichnet, daß Styrol und konjugierte Diene als äthylenisch ungesättigte Monomere eingesetzt werden.

9. Verfahren zur Herstellung von telechelen Polymeren nach einem oder mehreren der Ansprüche 1 bis 8, dadurch gekennzeichnet, daß man die äthylenisch ungesättigten Monomeren in Gegenwart der Initiatoren bei einer Temperatur zwischen -50 und 200 °C polymerisiert.

10. Verfahren nach Anspruch 9, dadurch gekennzeichnet, daß man bei einer Temperatur zwischen 70 und 150 °C polymerisiert.

11. Verfahren nach Anspruch 9, dadurch gekennzeichnet, daß man photolytisch bei einer Temperatur zwischen -10 und 150 °C polymerisiert.

12. Verfahren nach einem oder mehreren der Ansprüche 9 bis 11, dadurch gekennzeichnet, daß man in Abwesenheit eines Lösungsmittels polymerisiert.

13. Verfahren nach einem oder mehreren der Ansprüche 9 bis 11, dadurch gekennzeichnet, daß man bis zu einem Zeitpunkt polymerisiert, an dem 30 bis 90% der äthylenisch ungesättigten Monomeren umgesetzt sind, und anschließend die nichtumgesetzten Monomeren vom Polymerisat durch Extraktion mittels eines geeigneten Lösungsmittels oder durch Destillation, gegebenenfalls unter vermindertem Druck, abtrennt.

14. Verfahren nach einem oder mehreren der Ansprüche 9 bis 11, dadurch gekennzeichnet, daß man in Gegenwart von Wasser als Reaktionsmedium polymerisiert.

15. Verfahren nach einem oder mehreren der Ansprüche 9 bis 11, dadurch gekennzeichnet, daß in Gegenwart von 2 bis 30 Gew.-% Initiator, bezogen auf das Gewicht der äthylenisch ungesättigten Monomeren, polymerisiert wird.

16. Verwendung von telechelen Polymeren nach einem oder mehreren der Ansprüche 1 bis 9 als reaktive Vorstufe zum Aufbau höherpolymerer linearer oder vernetzter Produkte.

17. Verwendung von telechelen Polymeren nach einem oder mehreren der Ansprüche 1 bis 9 als Bestandteil von wäßrigen Lösungen, Emulsionen, Dispersionen und Suspensionen.

18. Verwendung von telechelen Polymeren nach einem oder mehreren der Ansprüche 1 bis 9 zur Herstellung wäßriger Lösungen, Emulsionen, Dispersionen und Suspensionen von aus diesen telechelen Polymeren resultierenden höherpolymeren linearen oder vernetzten Produkten.

19. Verwendung von telechelen Polymeren nach einem oder mehreren der Ansprüche 1 bis 9 als reaktive Vorstufe von höherpolymeren linearen oder vernetzten Bindemitteln in wäßrigen Anstrichmittel-Systemen.

20. Verwendung von telechelen Polymeren nach einem oder mehreren der Ansprüche 1 bis 9 in wäßrigen Systemen zur elektrophoretischen Abscheidung von Beschichtungen.

21. Verwendung von telechelen Polymeren nach einem oder mehreren der Ansprüche 1 bis 9 nach elektrophoretischer Abscheidung in wäßrigen Systemen als reaktive Vorstufe von höherpolymeren linearen oder vernetzten Beschichtungen.

22. Verwendung von telechelen Polymeren nach einem oder mehreren der Ansprüche 1 bis 9 zur Herstellung von Elastomeren.

23. Verwendung von telechelen Polymeren nach einem oder mehreren der Ansprüche 1 bis 9 zur Modifizierung von Oberflächen.

## Claims

1. Telechelic polymers based on ethylenically unsaturated monomers - radical-polymerized by dithiocarbamate initiators - corresponding to the following general formula

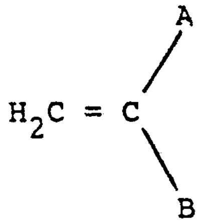 (IX)   A-CH=CH-B   (X)

in which

A = H, $CH_3$, Cl, CN, COOR, $CH_2$-COOR

B = COOR, $CH=CH_2$, Cl, CN, $C_6H_5$, $C_6H_4Cl$, p-tolyl, chlorotolyl, pyridyl,

R = $C_{1-12}$, alkyl,

which are obtained by polymerization in the presence of thiuram disulfides and/or esters of dithiocarbamic acid containing one or more other functional reactive group(s) in addition to the carbamate group, characterized in that they are obtained by polymerization in the presence of thiuram disulfides and/or dithiocarbamates containing amino, hydroxy, carboxyl and/or carbonyl groups as the other functional, chemically reactive group(s), but not in the presence of bis-(N-methyl-N-hydroxyethyl)-thiruam disulfide where hydrogen peroxide is used as an additional initiator.

2. Telechelic polymers as claimed in claim 1, characterized in that they are obtained by polymerization in the presence of thiuram disulfides and dithiocarbamates corresponding to the general formula

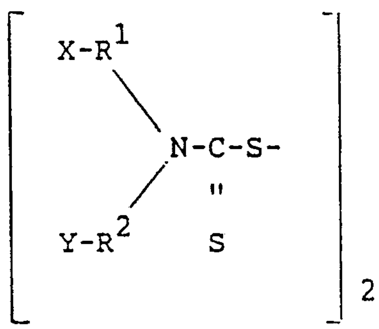 and 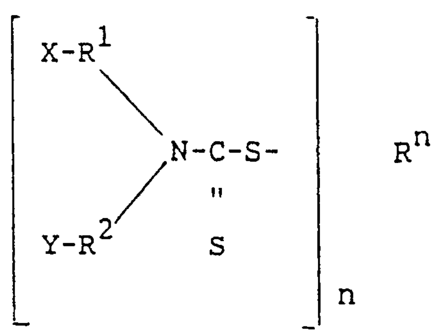

(I)   (II)

in which

X,Y = H, COOH, $NR^3R^4$, $\overset{\oplus}{N}R^3R^4R^5$, OH, 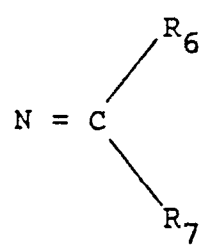

X ≠ H where Y = H

Y ≠ H where X = H

$R^1$, $R^2$ = $C_{1-10}$ alkylene, $C_{5-10}$ cycloalkylene,

$R^3$, $R^4$, $R^5$ = H, $C_{1-18}$ alkyl,

$R^6$, $R^7$ = H, aromatic $C_{6-10}$ radical, cycloaliphatic $C_{5-10}$ radical, aliphatic $C_{1-6}$ radical,

$R^6$ ≠ H where $R^7$ = H,

$R^7$ ≠ H where $R^6$ = H,

$R^n$ = an n-functional organic radical with one to n methylene group(s) which are in the α-position to a carbonyl group and to a carbon atom of an aromatic ring system, the organic radical $R^n$ being

attached by such a methylene group to the dithiocarbamate sulfur atom in formula (II),
n = integers of 1 to 4
or in which the group

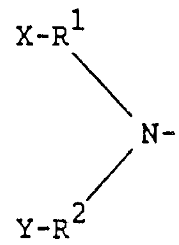

forms a heterocyclic ring (III)

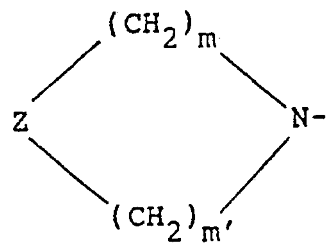

(III)

with Z = NH, $NR^1$-X, CO, CH-W, W = COOH, COOR, OH, $R^1OH$ and
m = integers of 1 to 3
and m' = 0 or integers of 1 to 3.

**3.** Telechelic polymers as claimed in claim 2, characterized in that $R^1$ and $R^2$ represent a $C_{1-3}$ alkylene radical.

**4.** Telechelic polymers as claimed in one or more of claims 2 and 3, characterized in that X and Y represent a hydrogen atom and/or the functional groups
OH, $NR^3R^4$ and

$$\overset{\oplus}{N}R^3R^4R^5$$

with $R^3$, $R^4$ and $R^5$ = H and $C_{1-4}$ alkyl.

**5.** Telechelic polymers as claimed in claim 2, characterized in that they are obtained by polymerization in the presence of thiuram disulfides corresponding to general formula (I), in which the group X-$R^1$-N-$R^2$-Y forms the heterocyclic ring (III) with m and m' = 2, Z = NH or $NR^1X$ with X = OH, $NH_2$ and N = CH-Ar and $R^1$ and $R^2$ are $C_{1-3}$ alkylene radicals.

**6.** Telechelic polymers as claimed in claim 1, characterized in that they are synthesized from radical-polymerized aromatic vinyl compounds and/or esters of acrylic acid and/or esters of methacrylic acid as ethylenically unsaturated monomers.

**7.** Telechelic polymers as claimed in claim 6, characterized in that the aromatic vinyl compounds are styrene, p-methyl styrene, p-chlorostyrene, chloromethyl styrene and/or 2-vinyl pyridine.

**8.** Telechelic polymers as claimed in claim 1, characterized in that they are synthesized from styrene and conjugated dienes as ethylenically unsaturated monomers.

**9.** A process for the production of the telechelic polymers claimed in one or more of claims 1 to 8, characterized in that the corresponding ethylenically unsaturated monomers are radical-polymerized in

the presence of initiators from the group of thiuram disulfides and dithiocarbamates containing one or more of the other functional reactive group(s) mentioned at a temperature of -50 to 200 °C.

**10.** A process as claimed in claim 9, characterized in that polymerization is carried out at a temperature of 70 to 150 °C.

**11.** A process as claimed in claim 9, characterized in that polymerization is carried out photolytically at a temperature of -10 to 150 °C.

**12.** A process as claimed in one or more of claims 9 to 11, characterized in that polymerization is carried out in the absence of a solvent.

**13.** A process as claimed in one or more of claims 9 to 11, characterized in that polymerization is continued to a time when 30 to 90% of the ethylenically unsaturated monomers have reacted, after which the unreacted monomers are separated from the polymer by extraction with a suitable solvent or by distillation, optionally under reduced pressure.

**14.** A process as claimed in one or more of claims 9 to 11, characterized in that polymerization is carried out in the presence of water as the reaction medium.

**15.** A process as claimed in one or more of claims 9 to 11, characterized in that polymerization is carried out in the presence of 2 to 30% by weight initiator, based on the weight of the ethylenically unsaturated monomers.

**16.** The use of telechelic polymers as claimed in one or more of claims 1 to 9 as reactive intermediates in the synthesis of linear or crosslinked higher polymers.

**17.** The use of the telechelic polymers claimed in one or more of claims 1 to 9 as a constituents of solutions, emulsions, dispersions and suspensions.

**18.** The use of the telechelic polymers as claimed in one or more of claims 1 to 9 for the production of aqueous solutions, emulsions, dispersions and suspensions of linear or crosslinked high polymers obtained from these telechelic polymers.

**19.** The use of the telechelic polymers claimed in one or more of claims 1 to 9 as reactive intermediates for linear or crosslinked higher polymer binders in waterborne paints.

**20.** The use of the telechelic polymers claimed in one or more of claims 1 to 9 in aqueous systems for the electrophoretic deposition of coatings.

**21.** The use of the telechelic polymers claimed in one or more of claims 1 to 9 after electrophoretic deposition in aqueous systems as reactive intermediates for linear or crosslinked higher polymer coatings.

**22.** The use of the telechelic polymers claimed in one or more of claims 1 to 9 for the production of elastomers.

**23.** The use of the telechelic polymers claimed in one or more of claims 1 to 9 for the modification of surface coatings.

Claims for the following Contracting State : ES

**1.** A process for the production of telechelic polymers based on ethylenically unsaturated monomers - radicalpolymerized by dithiocarbamate initiators - corresponding to the following general formula

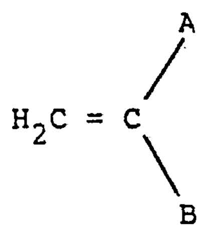 (IX) A-CH=CH-B (X)

in which

A = H, $CH_3$, Cl, CN, COOR, $CH_2$-COOR

B = COOR, CH=$CH_2$, Cl, CN, $C_6H_5$, $C_6H_4Cl$, p-tolyl, chloro-tolyl, pyridyl,

R = $C_{1-12}$ alkyl,

which are obtained by polymerization in the presence of thiuram disulfides and/or esters of dithiocarbamic acid containing one or more other functional reactive group(s) in addition to the carbamate group, characterized in that they are obtained by polymerization in the presence of thiuram disulfides and/or dithiocarbamates containing amino, hydroxy, carboxyl and/or carbonyl groups as the other functional, chemically reactive group(s) , but not in the presence of bis-(N-methyl-N-hydroxyethyl)-thiruam disulfide where hydrogen peroxide is used as an additional initiator.

2. A process for the production of telechelic polymers as claimed in claim 1, characterized in that they are obtained by polymerization in the presence of thiuram disulfides and dithiocarbamates corresponding to the gerneral formula

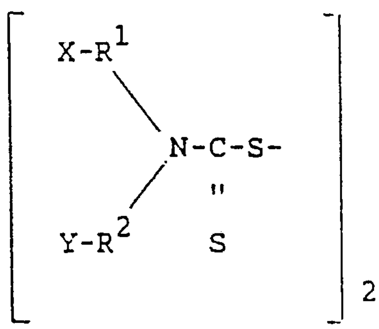 and 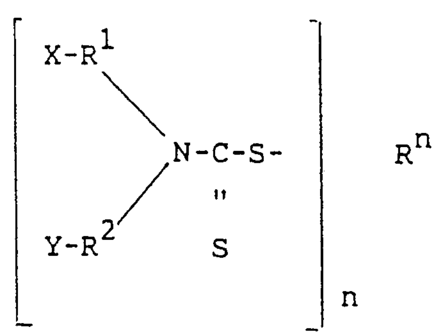

(I) (II)

in which

X,Y = H, COOH, $NR^3R^4$, $\overset{\oplus}{N}R^3R^4R^5$, OH, 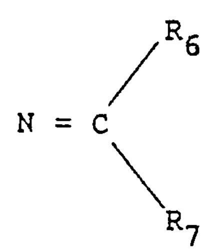

X ≠ H where Y = H

Y ≠ H where X = H

$R^1$, $R^2$ = $C_{1-10}$ alkylene, $C_{5-10}$ cycloalkylene,

$R^3$, $R^4$, $R^5$ = H, $C_{1-18}$ alkyl,

$R^6$, $R^7$ = H, aromatic $C_{6-10}$ radical, cycloaliphatic $C_{5-10}$ radical, aliphatic $C_{1-6}$ radical,

$R^6$ ≠ H where $R^7$ = H,

$R^7$ ≠ H where $R^6$ = H,

$R^n$ = an n-functional organic radical with one to n methylene group(s) which are in the α-position to a

carbonyl group and to a carbon atom of an aromatic ring system, the organic radical $R^n$ being attached by such a methylene group to the dithiocarbamate sulfur atom in formula (II),
n = integers of 1 to 4
or in which the group

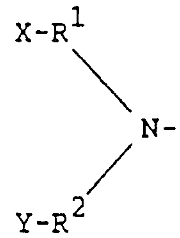

forms a heterocyclic ring (III)

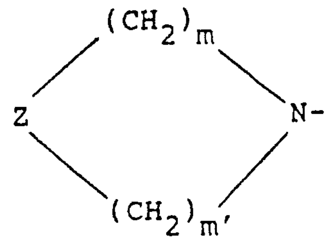 (III)

with Z = NH, $NR^1$-X, C=O, CH-W, W = COOH, COOR, OH, $R^1OH$ and
m = integers of 1 to 3
and m' = 0 or integers of 1 to 3.

**3.** A process for the production of telechelic polymers as claimed in claim 2, characterized in that $R^1$ and $R^2$ represent a $C_{1-3}$ alkylene radical.

**4.** A process for the production of telechelic polymers as claimed in one or more of claims 2 and 3, characterized in that X and Y represent a hydrogen atom and/or the functional groups
OH, $NR^3R^4$ and

$$\overset{\oplus}{N}R^3R^4R^5$$

with $R^3$, $R^4$ and $R^5$ = H and $C_{1-4}$ alkyl.

**5.** A process for the production of telechelic polymers as claimed in claim 2, characterized in that they are obtained by polymerization in the presence of thiuram disulfides corresponding to general formula (I), in which the group X-$R^1$-N-$R^2$-Y forms the heterocyclic ring (III) with m and m' = 2, Z = NH or $NR^1X$ with X = OH, $NH_2$ and N = CH-Ar and $R^1$ and $R^2$ are $C_{1-3}$ alkylene radicals.

**6.** A process for the production of telechelic polymers as claimed in claim 1, characterized in that they are synthesized from radical-polymerized aromatic vinyl compounds and/or esters of acrylic acid and/or esters of methacrylic acid as ethylenically unsaturated monomers.

**7.** A process for the production of telechelic polymers as claimed in claim 6, characterized in that the aromatic vinyl compounds are styrene, p-methyl styrene, p-chlorostyrene, chloromethyl styrene and/or 2-vinyl pyridine.

8. A process for the production of telechelic polymers as claimed in claim 1, characterized in that they are synthesized from styrene and conjugated dienes as ethylenically unsaturated monomers.

9. A process for the production of the telechelic polymers claimed in one or more of claims 1 to 8, characterized in that the ethylenically unsaturated monomers are polymerized in the presence of the initiators at a temperature of -50 to 200° C.

10. A process as claimed in claim 9, characterized in that polymerization is carried out at a temperature of 70 to 150° C.

11. A process as claimed in claim 9, characterized in that polymerization is carried out photolytically at a temperature of -10 to 150° C.

12. A process as claimed in one or more of claims 9 to 11, characterized in that polymerization is carried out in the absence of a solvent.

13. A process as claimed in one or more of claims 9 to 11, characterized in that polymerization is continued to a time when 30 to 90% of the ethylenically unsaturated monomers have reacted, after which the unreacted monomers are separated from the polymer by extraction with a suitable solvent or by distillation, optionally under reduced pressure.

14. A process as claimed in one or more of claims 9 to 11, characterized in that polymerization is carried out in the presence of water as the reaction medium.

15. A process as claimed in one or more of claims 9 to 11, characterized in that polymerization is carried out in the presence of 2 to 30% by weight initiator, based on the weight of the ethylenically unsaturated monomers.

16. The use of telechelic polymers as produced according to one or more of claims 1 to 15 as reactive intermediates in the synthesis of linear or crosslinked higher polymers.

17. The use of the telechelic polymers as produced according to one or more of claims 1 to 15 as a constituents of solutions, emulsions, dispersions and suspensions.

18. The use of the telechelic polymers as produced according to one or more of claims 1 to 15 for the production of aqueous solutions, emulsions, dispersions and suspensions of linear or crosslinked high polymers obtained from these telechelic polymers.

19. The use of the telechelic polymers as produced according to one or more of claims 1 to 15 as reactive intermediates for linear or crosslinked higher polymer binders in waterborne paints.

20. The use of the telechelic polymers as produced according to one or more of claims 1 to 15 in aqueous systems for the electrophoretic deposition of coatings.

21. The use of the telechelic polymers as produced according to one or more of claims 1 to 15 after electrophoretic deposition in aqueous systems as reactive intermediates for linear or crosslinked higher polymer coatings.

22. The use of the telechelic polymers as produced according to one or more of claims 1 to 15 for the production of elastomers.

23. The use of the telechelic polymers as produced according to one or more of claims 1 to 15 for the modification of surface coatings.

**Revendications**

1. Polymère téléchels, à base de monomères à insaturation éthylénique, polymérisés par voie radicalaire à l'aide d'amorceurs de type dithiocarbamate, et présentant les formules générales

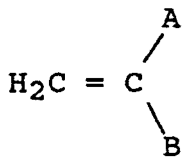 (IX) A-CH=CH-B (X)

A = H, $CH_3$, Cl, CN, COOR, $CH_2$-COOR
B = COOR,- $CH=CH_2$, Cl, CN, $C_6H_5$, $C_6H_4Cl$, para-toluyle, chlorotoluyle, pyridyle,
R = groupe alkyle de 1 à 12 atomes de C,
que l'on obtient par polymérisation à l'aide de disulfures de thiurame et/ou d'esters de l'acide dithiocarbamique, comportant, en plus du groupement carbamate, un ou plusieurs autres groupes fonctionnels réactifs, **caractérisés** en ce qu'ils sont obtenus par polymérisation à l'aide de disulfures de thiurame et/ou de dithiocarbamates qui comportent, en tant qu'autres groupes fonctionnels chimiquement réactifs, des groupes amino, hydroxy, carboxy et/ou carbonyle, à l'exclusion du disulfure de bis-(N-méthyl-N-hydroxyéthyl)-thiurame, quand on utilise du peroxyde d'hydrogène comme amorceur supplémentaire.

2. Polymères téléchels selon la revendication 1, **caractérisés** en ce qu'on les obtient par polymérisation à l'aide de disulfures de thiurame et de dithiocarbamates de formules générales

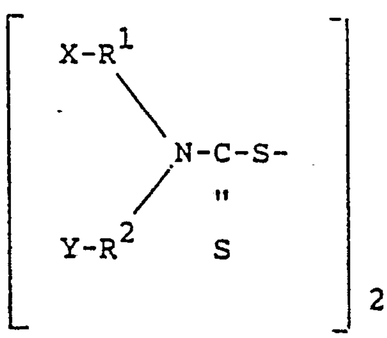

et

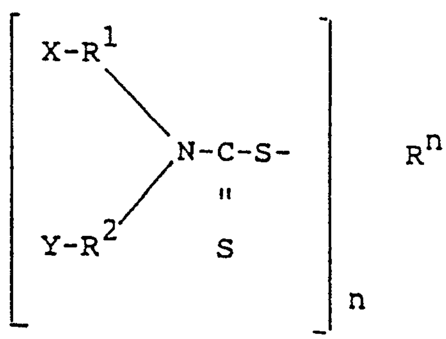

(I) (II)

dans lesquelles

X, Y = H, COOH, $NR^3R^4$, $N^{\oplus}R^3R^4R^5$, OH, 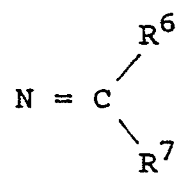

X ≠ H, si Y = H
Y ≠ H, si X = H
$R^1$, $R^2$ = alkylène de 1 à 10 atomes de carbone, cycloalkylène de 5 à 10 atomes de carbone
$R^3$, $R^4$, $R^5$ = H, groupe alkyle de 1 à 18 atomes de carbone,
$R^6$, $R^7$ = H, groupe aromatique de 6 à 10 atomes de carbone, groupe cycloaliphatique de 5 à 10 atomes de carbone, groupe aliphatique de 1 à 6 atomes de carbone
$R^6 \neq H$, si $R^7 = H$
$R^7 \neq H$, si $R^6 = H$
$R^n$ = groupe organique de valence n, comportant 1 à n groupes méthylène, qui se trouve en position $\alpha$ d'un groupe carbonyle ou d'un atome de carbone d'un système cyclique aromatique, le groupe organique $R^n$ étant lié, par l'intermédiaire d'un tel groupe méthylène, à l'atome de soufre du dithiocarbamate selon la formule (II),

n = nombre entier de 1 à 4
ou dans lesquelles le groupement

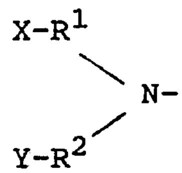

forme un noyau hérérocyclique (III)

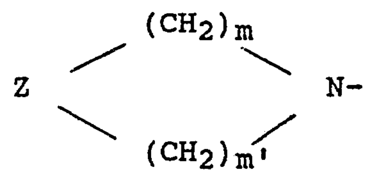 (III)

avec Z = NH, $NR^1$-X, C=O, CH-W, W = COOH, COOR, OH, $R^1OH$
et m = nombre entier de 1 à 3, et
m' = zéro ou nombre entier de 1 à 3.

3. Polymères téléchels selon la revendication 2, **caractérisés** en ce que $R^1$ et $R^2$ représentent un groupe alkylène comportant de 1 à 3 atomes de carbone.

4. Polymères téléchels selon une ou plusieurs des revendications 2 et 3, **caractérisés** en ce que X et Y représentent un atome d'hydrogène et/ou les groupes fonctionnels OH, $NR^3R^4$ e

$$N^{\oplus}R^3R^4R^5$$

avec $R^3$, $R^4$ et $R^5$ = H ou alkyle en $C_{1-4}$.

5. Polymères téléchels selon la revendication 2, **caractérisés** en ce qu'on les obtient par polymérisation avec des disulfures de thiurame de formule générale (I) dans lesquels le groupement X-$R^1$-N-$R^2$-Y représente le noyau hétérocyclique (III) avec m et m' = 2, Z = NH ou $HR^1X$ avec X = OH, $NH_2$ ou N=CH-Ar, $R^1$ et $R^2$ pouvant également représenter des groupes alkylènes de 1 à 3 atomes de carbone.

6. Polymères téléchels selon la revendication 1, **caractérisés** en ce qu'ils sont constitués de monomères à insaturation éthylénique, polymérisés par voie radicalaire, qui sont des composés vinylaromatiques et/ou des esters de l'acide acrylique et/ou des esters de l'acide méthacrylique.

7. Polymères téléchels selon la revendication 6, **caractérisés** en ce que les composés vinylaromatiques sont du styrène, du p-méthylstyrène, du p-chlorostyrène, du chlorométhylstyrène et/ou de la 2-vinylpyridine.

8. Polymères téléchels selon la revendication 1, **caractérisés** en ce qu'ils sont constitués de monomères à insaturation éthylénique qui sont du styrène et des diènes conjugués.

9. Procédé de préparation de polymères téléchels selon une ou plusieurs des revendications 1 à 8, **caractérisé** en ce que l'on effectue la polymérisation des monomères à insaturation éthylénique correspondants, par voie radicalaire et à une température située entre -50 et 200 °C, en présence d'amorceurs choisis dans le groupe des disulfures de thiurame et des dithiocarbamates qui comportent, en plus du groupement carbamate, un ou plusieurs des autres groupes fonctionnels réactifs mentionnés.

10. Procédé selon la revendication 9, **caractérisé** en ce que l'on effectue la polymérisation à une température située entre 70 et 150 °C.

**11.** Procédé selon la revendication 9, **caractérisé** en ce que l'on effectue la polymérisation par voie photolytique, à une température située entre -10 et 150 ° C.

**12.** Procédé selon une ou plusieurs des revendications 9 à 11, **caractérisé** en ce que l'on effectue la polymérisation en l'absence d'un solvant.

**13.** Procédé selon une ou plusieurs des revendications 9 à 11, **caractérisé** en ce que l'on effectue la polymérisation jusqu'au moment où 30 à 90% des monomères à insaturation éthylénique sont convertis, et l'on sépare ensuite les monomères non convertis d'avec le produit de polymérisation, par extraction au moyen d'un solvant approprié ou par distillation, éventuellement sous pression réduite.

**14.** Procédé selon une ou plusieurs des revendications 9 à 11, **caractérisé** en ce que l'on effectue la polymérisation en présence d'eau, en tant que milieu réactionnel.

**15.** Procédé selon une ou plusieurs des revendications 9 à 11, **caractérisé** en ce que l'on effectue la polymérisation en présence de 2 à 30% en poids d'amorceur, par rapport au poids des monomères à insaturation éthylénique.

**16.** Utilisation des polymères téléchels selon une ou plusieurs des revendications 1 à 9, comme précurseurs réactifs pour la synthèse de produits hauts polymères linéaires ou ramifiés.

**17.** Utilisation de polymères téléchels selon une ou plusieurs des revendications 1 à 9, comme constituants de solutions, émulsions, dispersions ou suspensions aqueuses.

**18.** Utilisation de polymères téléchels selon une ou plusieurs des revendications 1 à 9, pour la préparation de solutions, émulsions, dispersions et suspensions aqueuses de produits hauts polymères linéaires ou ramifiés provenant de ces polymères téléchels.

**19.** Utilisation des polymères téléchels selon une ou plusieurs des revendications 1 à 9, comme précurseurs réactifs de liants hauts polymères linéaires ou ramifiés dans des systèmes aqueux d'agents de peinture.

**20.** Utilisation des polymères téléchels selon une ou plusieurs des revendications 1 à 9, dans des systèmes aqueux pour le dépôt de revêtements minces par électrophorèse.

**21.** Utilisation des polymères téléchels selon une ou plusieurs des revendications 1 à 9, après dépôt par électrophorèse dans des systèmes aqueux, comme précurseurs réactifs de revêtements minces en hauts polymères linéaires ou ramifiés.

**22.** Utilisation de polymères téléchels selon une ou plusieurs des revendications 1 à 9, pour la fabrication d'élastomères.

**23.** Utilisation des polymères téléchels selon une ou plusieurs des revendications 1 à 9, pour modifier des surfaces.

Revendications pour l'Etat contractant suivant : ES

**1.** Procédé de préparation de polymères téléchels, à base de monomères à insaturation éthylénique, polymérisés par voie radicalaire à l'aide d'amorceurs de type dithiocarbamate, et présentant les formules générales

```
         A
        /
H2C = C      (IX)            A-CH=CH-B          (X)
        \
         B
```

A = H, $CH_3$, Cl, CN, COOR, $CH_2$-COOR

B = COOR, CH=$CH_2$, Cl, CN, $C_6H_5$, $C_6H_4Cl$, para-toluyle, chlorotoluyle, pyridyle,

R = groupe alkyle de 1 à 12 atomes de C,
que l'on obtient par polymérisation à l'aide de disulfures de thiurame et/ou d'esters de l'acide dithiocarbamique, comportant, en plus du groupement carbamate, un ou plusieurs autres groupes fonctionnels réactifs, **caractérisés** en ce qu'ils sont obtenus par polymérisation à l'aide de disulfures de thiurame et/ou de dithiocarbamates qui comportent, en tant qu'autres groupes fonctionnels chimiquement réactifs, des groupes amino, hydroxy, carboxy et/ou carbonyle, à l'exclusion du disulfure de bis-(N-méthyl-N-hydroxyéthyl)-thiurame, quand on utilise du peroxyde d'hydrogène comme amorceur supplémentaire.

**2.** Procédé de préparation de
polymères téléchels selon la revendication 1, caractérisés en ce qu'on les obtient par polymérisation à l'aide de disulfures de thiurame et de dithiocarbamates de formules générales

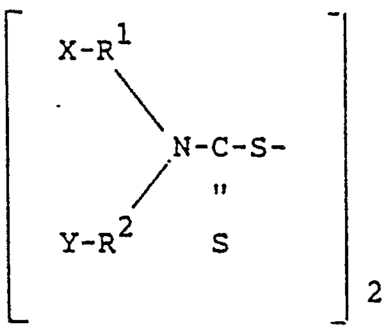

et

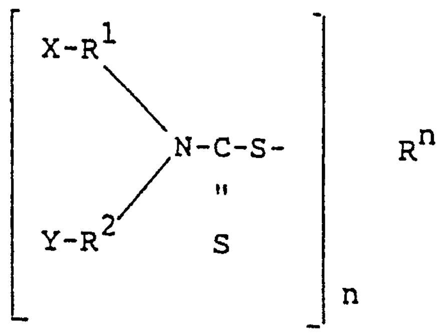

(I) (II)

dans lesquelles

X, Y = H, COOH, $NR^3R^4$, $N^{\oplus}R^3R^4R^5$, OH, 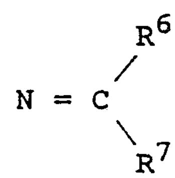

X ≠ H, si Y = H
Y ≠ H, si X = H

$R^1$, $R^2$ = alkylène de 1 à 10 atomes de carbone, cycloalkylène de 5 à 10 atomes de carbone
$R^3$, $R^4$, $R^5$ = H, groupe alkyle de 1 à 18 atomes de carbone,
$R^6$, $R^7$ = H, groupe aromatique de 6 à 10 atomes de carbone, groupe cycloaliphatique de 5 à 10 atomes de carbone, groupe aliphatique de 1 à 6 atomes de carbone
$R^6 \neq H$, si $R^7 = H$
$R^7 \neq H$, si $R^6 = H$

$R^n$ = groupe organique de valence n, comportant 1 à n groupes méthylène, qui se trouve en position $\alpha$ d'un groupe carbonyle ou d'un atome de carbone d'un système cyclique aromatique, le groupe organique $R^n$ étant lié, par l'intermédiaire d'un tel groupe méthylène, à l'atome de soufre du dithiocarbamate selon la formule (II),

n = nombre entier de 1 à 4
ou dans lesquelles le groupement

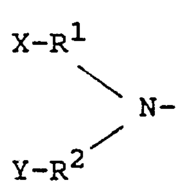

forme un noyau hérérocyclique (III)

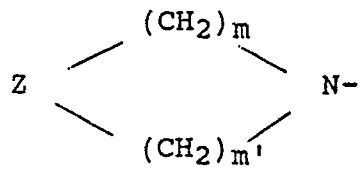 (III)

avec Z = NH, $NR^1$-X, C=O, CH-W, W = COOH, COOR, OH, $R^1OH$
et m = nombre entier de 1 à 3, et
m' = zéro ou nombre entier de 1 à 3.

**3.** Procédé de préparation de polymères téléchels selon la revendication 2, **caractérisés** en ce que $R^1$ et $R^2$ représentent un groupe alkylène comportant de 1 à 3 atomes de carbone.

**4.** Procédé de préparation de polymères téléchels selon une ou plusieurs des revendications 2 et 3, **caractérisés** en ce que X et Y représentent un atome d'hydrogène et/ou les groupes fonctionnels OH, $NR^3R^4$ e

$$N^{\oplus}R^3R^4R^5$$

avec $R^3$, $R^4$ et $R^5$ = H ou alkyle en $C_{1-4}$.

**5.** Procédé de préparation de polymères téléchels selon la revendication 2, **caractérisés** en ce qu'on les obtient par polymérisation avec des disulfures de thiurame de formule générale (I) dans lesquels le groupement X-$R^1$-N-$R^2$-Y représente le noyau hétérocyclique (III) avec m et m' = 2, Z = NH ou $NR^1X$ avec x = OH, $NH_2$ ou N=CH-Ar, $R^1$ et $R^2$ pouvant également représenter des groupes alkylènes de 1 à 3 atomes de carbone.

**6.** Procédé de préparation de polymères téléchels selon la revendication 1, **caractérisés** en ce qu'ils sont constitués de monomères à insaturation éthylénique, polymérisés par voie radicalaire, qui sont des composés vinylaromatiques et/ou des esters de l'acide acrylique et/ou des esters de l'acide méthacrylique.

**7.** Procédé de préparation de polymères téléchels selon la revendication 6, **caractérisés** en ce que les composés vinylaromatiques sont du styrène, du p-méthylstyrène, du p-chlorostyrène, du chlorométhylstyrène et/ou de la 2-vinylpyridine.

**8.** Procédé de préparation de polymères téléchels selon la revendication 1, **caractérisés** en ce qu'ils sont constitués de monomères à insaturation éthylénique qui sont du styrène et des diènes conjugués.

**9.** Procédé de préparation de polymères téléchels selon une ou plusieurs des revendications 1 à 8, **caractérisé** en ce que l'on effectue la polymérisation des monomères à insaturation éthylénique en présence d'amorceurs à une température située entre -50 et 200 °C.

**10.** Procédé selon la revendication 9, **caractérisé** en ce que l'on effectue la polymérisation à une température située entre 70 et 150 °C.

**11.** Procédé selon la revendication 9, **caractérisé** en ce que l'on effectue la polymérisation par voie photolytique, à une température située entre -10 et 150 °C.

**12.** Procédé selon une ou plusieurs des revendications 9 à 11, **caractérisé** en ce que l'on effectue la polymérisation en l'absence d'un solvant.

13. Procédé selon une ou plusieurs des revendications 9 à 11, **caractérisé** en ce que l'on effectue la polymérisation jusqu'au moment où 30 à 90% des monomères à insaturation éthylénique sont convertis, et l'on sépare ensuite les monomères non convertis d'avec le produit de polymérisation, par extraction au moyen d'un solvant approprié ou par distillation, éventuellement sous pression réduite.

14. Procédé selon une ou plusieurs des revendications 9 à 11, **caractérisé** en ce que l'on effectue la polymérisation en présence d'eau, en tant que milieu réactionnel.

15. Procédé selon une ou plusieurs des revendications 9 à 11, **caractérisé** en ce que l'on effectue la polymérisation en présence de 2 à 30% en poids d'amorceur, par rapport au poids des monomères à

16. Utilisation des polymères téléchels preparés selon une ou plusieurs des revendications 1 à 15, comme précurseurs réactifs pour la synthèse de produits hauts polymères linéaires ou ramifiés.

17. Utilisation de polymères téléchels preparés selon une ou plusieurs des revendications 1 à 15, comme constituants de solutions, émulsions, dispersions ou suspensions aqueuses.

18. Utilisation de polymères téléchels preparés selon une ou plusieurs des revendications 1 à 15, pour la préparation de solutions, émulsions, dispersions et suspensions aqueuses de produits hauts polymères linéaires ou ramifiés provenant de ces polymères téléchels.

19. Utilisation des polymères téléchels preparés selon une ou plusieurs des revendications 1 à 15, comme précurseurs réactifs de liants hauts polymères linéaires ou ramifiés dans des systèmes aqueux d'agents de peinture.

20. Utilisation des polymères téléchels preparés selon une ou plusieurs des revendications 1 à 15, dans des systèms aqueux pour le dépôt de revêtements minces par électrophorèse.

21. Utilisation des polymères téléchels preparés selon une ou plusieurs des revendications 1 à 15, après dépôt par électrophorèse dans des systèmes aqueux, comme précurseurs réactifs de revêtements minces en hauts polymères linéaires ou ramifiés.

22. Utilisation de polymères téléchels preparés selon une ou plusieurs des revendications 1 à 15, pour la fabrication d'élastomères.

23. Utilisation des polymères téléchels preparés selon une ou plusieurs des revendications 1 à 15, pour modifier des surfaces.